(19) Europäisches Patentamt
European Patent Office
Office européen des brevets

(11) **EP 2 380 115 B1**

(12) **EUROPÄISCHE PATENTSCHRIFT**

(45) Veröffentlichungstag und Bekanntmachung des Hinweises auf die Patenterteilung:
**05.08.2015 Patentblatt 2015/32**

(21) Anmeldenummer: **10702408.5**

(22) Anmeldetag: **04.01.2010**

(51) Int Cl.:
*H01Q 7/00* (2006.01)    *G06K 19/077* (2006.01)

(86) Internationale Anmeldenummer:
**PCT/EP2010/000005**

(87) Internationale Veröffentlichungsnummer:
**WO 2010/076335 (08.07.2010 Gazette 2010/27)**

(54) **MEHRSCHICHTIGES FOLIENELEMENT**

MULTILAYER FILM ELEMENT

ELÉMENT FILM À PLUSIEURS COUCHES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **05.01.2009 DE 102009004130**

(43) Veröffentlichungstag der Anmeldung:
**26.10.2011 Patentblatt 2011/43**

(73) Patentinhaber: **Leonhard Kurz Stiftung & Co. KG**
**90763 Fürth (DE)**

(72) Erfinder:
• **PETERS, John, Anthony.**
**CH-8804 Au (CH)**
• **SCHINDLER, Ulrich**
**90762 Fürth (DE)**
• **SCHUMACHER, Christian**
**90768 Fürth (DE)**

(74) Vertreter: **Zinsinger, Norbert**
**Louis, Pöhlau, Lohrentz**
**Patentanwälte**
**Postfach 30 55**
**90014 Nürnberg (DE)**

(56) Entgegenhaltungen:
**EP-A2- 0 142 380         EP-A2- 0 704 928**
**DE-A1-102007 027 838**

**EP 2 380 115 B1**

**Beschreibung**

Die Erfindung bezientsichauf ein mehrschichtiges Folienelement mit einer fiexiblen dielektrischen Trägerschicht und einer elektrisch leitfähigen Schicht gemäß dem Oberbegriff des Anspruchs 1 sowie ein Verfahren zur Herstellung eines solchen Folienelements gemäß dem Oberbegriff des Anspruchs 15.

Die DE 19 601 358 C2 beschreibt ein Sicherheitsdokument, bei dem in die Papiermasse einer Banknote ein Chip eingebracht ist, welcher mit einer Antenne versehen ist. Aus Gründen der mechanischen Stabilität wird der Chip hierbei auf einen Träger laminiert, bei dem es sich um eine metallisierte Folie handelt.

Die EP 1 179 811 A1 beschreibt auf dem Papierträger einer Banknote mittels einer Kleberschicht ein Sicherheitselement zu befestigen, welches eine Substratschicht und eine Metallschicht aufweist. Die Metallschicht bildet hierbei eine schleifenförmige Antenne aus, welche mit einer integrierten Schaltung verbunden ist. Mittels der Antenne können dann in der integrierten Schaltung gespeicherte Daten ausgelesen werden. DE 10 2007 027 838 A1 offenbart ein mehrschichtiges Folienelement mit einer flexiblen dielektrischen Schicht und mehreren elektrisch leitfähigen Schichten.

Der Erfindung liegt nun die Aufgabe zugrunde, um mit geringen Verbauch an elektrisch leitfähigem material eine Antenne mit einer vergleichsweise hohen Induktivität und vergleichsweise niedrigen Kapazität zu erzielen.

Diese Aufgabe wird von einem mehrschichtigen Folienelement gemäß Anspruch 1 gelöst. Diese Aufgabe wird weiter von einem Verfahren zur Herstellung eines mehrschichtigen Folienelements gemäß Anspruch 15 gelöst. Die Ausformung der spulenförmigen Leiterbahnen sowie die Überdeckung derselben in Bezug auf die senkrecht auf der von der Trägerschicht aufgespannten Ebene stehende Richtung wird hierbei insbesondere derart gestaltet, dass die Flächenabmessungen der

Überdeckungsfläche des ersten und zweiten Leiterbahnabschnitts bei einer (gedachten) Verschiebung der ersten spulenförmigen Leiterbahn gegen die zweite spulenförmige Leiterbahn in einer, in der von der Trägerschicht aufgespannten Ebene liegenden erste Richtung um 100 $\mu$m konstant bleibt.

Das erfindungsgemäße Folienelement eignet sich insbesondere für Massenprodukte wie RFID-Tags, Kreditkarten, Smart Cards, Passbücher und ähnlichem, bei denen eine kostengünstige Fertigung bei geringem Platzbedarf gefordert ist.

Gemäß einem bevorzugten Ausführungsbeispiel der Erfindung überdeckt der erste Leiterbahnabschnitt in einem t Windungen des ersten Leiterbahnabschnitt umfassenden Bereich den zweiten Leiterbahnabschnitt vollständig. Weiter ist in diesem Bereich entlang des ersten Leiterbahnabschnitts die Ausdehnung der zweiten Leiterbahn in mindestens einer, in der von der Trägerschicht aufgespannten Ebene liegenden ersten Richtung um den Wert geringer als die Ausdehnung der ersten Leiterbahn, wobei $t \geq \frac{1}{4}$ und $r \geq 100$ $\mu$m ist. Vorzugsweise überdeckt hierbei der (gesamte) erste Leiterbahnabschnitt den zweiten Leiterbahnabschnitt in Bezug auf die senkrecht auf die von der Trägerschicht aufgespannten Ebene stehenden Richtung vollständig und entlang des (gesamten) ersten Leiterbahnabschnitts ist die Ausdehnung der zweiten Leiterbahn in der ersten Richtung zumindest um 100 $\mu$m geringer als die Ausdehnung der ersten Leiterbahn.

Überraschenderweise hat sich gezeigt, dass bei einer derartigen Ausgestaltung eines mehrschichtigen Folienelements im Vergleich zu einer üblichen spiralförmigen Antennenstruktur bei vorgegebener Resonanzfrequenz bei gleichem Verbrauch an elektrisch leitfähigem Material der Qualitätsfaktor der Antennenstruktur um ca. 80 % verbessert werden kann. Im weiteren verringert sich auch die Abweichung der Resonanzfrequenz der Antennenstruktur der gefertigten Folienelemente von der vorgegebenen Ziel-Resonanzfrequenz deutlich und auch die Beeinflussung der Resonanzfrequenz durch Schwankungen der Eingangskapazität der mit der Antennenstruktur verbundenen elektrischen Schaltkreise wird deutlich verringert. Durch die kapazitive Kopplung der ersten und zweiten Leiterbahnabschnitte, die spezielle relative Abmessung der ersten und zweiten Leiterbahnabschnitte zueinander und deren spezieller Anordnung zueinander werden hierbei eventuelle während des Herstellungsprozesses auftretende Toleranzen bzw. Registerabweichungen bei der Aufbringung und Strukturierung der ersten und zweiten elektrisch leitfähigen Schichten abgefangen und weiterhin die Güte bei gleichem Materialverbrauch wie oben beschrieben verbessert.

Entlang der ersten Leiterbahn ist in der ersten Richtung die Ausdehnung der zweiten Leiterbahn vorzugsweise zwischen 200 und 400 $\mu$m geringer als die Ausdehnung der ersten Leiterbahn. Die Ausdehnung der zweiten Leiterbahn in die erste Richtung beträgt weiter bevorzugt zwischen 98% und 99,9% der Ausdehnung der ersten Leiterbahn, betrachtet entlang des ersten Leiterbahnabschnitts.

Gemäß eines weiteren bevorzugten Ausführungsbeispiels der Erfindung ist die Ausdehnung der zweiten Leiterbahn entlang des ersten bzw. zweiten Leiterbahnabschnitts nicht nur in der ersten Richtung, sondern auch in einer zweiten Richtung geringer als die der ersten Leiterbahn. So ist entlang des ersten bzw. zweiten Leiterbahnabschnitts in der zweiten Richtung, die ebenfalls in der von der Trägerschicht aufgespannten Ebene liegt und die mit der ersten Richtung einen rechten Winkel einschließt, die Ausdehnung der zweiten Leiterbahn vorzugsweise zumindest 50 $\mu$m geringer als die Ausdehnung der ersten Leiterbahn. Hierdurch werden weitere Vorteile in Bezug auf eine geringe Variation der Resonanzfrequenz der Antennenstruktur der gefertigten Folienelemente sowie in Bezug auf deren Qualitätsfaktor erzielt. Die Resonanzfrequenz und der Qualitätsfaktor werden jeweils durch die Kapazität und Induktivität bestimmt, die durch die erste und zweite Leiterbahn gebildet sind. Durch die weitgehend gleich bleibende Überlappung der ersten und zweiten Leiterbahn bleiben Kapazität und Induktivität ebenfalls weitgehend konstant, was dadurch eine geringe Variation der Resonanzfrequenz und des Qualitätsfaktors der Antennenstruktur der gefertigten Folienelemente zur Folge hat. Weiter hat sich hierbei bewährt, dass entlang des ersten Leiterbahnabschnitts in der ersten Richtung die Ausdehnung der zweiten Leiterbahn zwischen 200 $\mu$m und 400 $\mu$m geringer als die Ausdehnung der ersten Leiterbahn ist. Es ist somit vorteilhaft, wenn die Leiterbahnbreite der ersten Leiterbahn entlang des ersten Leiterbahnabschnitts zwischen 200 und 400 $\mu$m geringer als die Leiterbahnbreite der zweiten Leiterbahn entlang des zweiten Leiterbahnabschnitts ist.

Weitere Vorteile sind erzielbar, wenn entlang eines ersten Leiterbahnabschnitts der Unterschied in der Ausdehnung der ersten und zweiten Leiterbahn in der ersten Richtung größer, insbesondere um mehr als 20 % größer als der Unterschied in der Ausdehnung der ersten und zweiten Leiterbahn in der zweiten Richtung ist.

Gemäß der Erfindung überdeckt in einem t Windungen des ersten Leiterbahnabschnitts umfassenden Bereich der erste Leiterbahnabschnitt zumindest zwei Teilabschnitte des zweiten Leiterbahnabschnitts jeweils teilweise, wobei die beiden Teilabschnitte unterschiedlichen Windungen der zweiten spulenförmigen Leiterbahn zugeordnet sind und t $\geq$ ¼ ist. Bei einer derartigen Ausgestaltung des Folienelements werden somit zwei benachbarte Windungen der zweiten spulenförmigen Leiterbahn über den ersten Leiterbahnabschnitt der ersten spulenförmigen Leiterbahn kapazitiv gekoppelt, und zwar in Form einer Serienschaltung von zwei Kapazitäten. Hierbei wird die erste Kapazität von der Überdeckungsfläche des einen Teilabschnitts des zweiten Leiterbahnabschnitts und des ersten Leiterbahnabschnittes und die zweite Kapazität von der Überdeckungsfläche des anderen Teilabschnitts des zweiten Leiterbahnabschnitts und des ersten Leiterbahnabschnitts gebildet. Diese beiden Kapazitäten, im Folgenden als C1 und C2 bezeichnet, bilden gemeinsam eine Gesamtkapazität C, wobei sich C entsprechend der seriellen Verschaltung der Kapazitäten wie folgt berechnet:

$$C = C1 * C2 / (C1 + C2).$$

Diese Ausführung ist besonders vorteilhaft für Antennen, welche eine vergleichsweise hohe Resonanzfrequenz, insbesondere von mehr als 16 MHz, kombiniert mit einer hohen Bandbreite benötigen. Durch die wie oben beschriebene Ausgestaltung des Folienelements lässt sich mit geringem Verbrauch an elektrisch leitfähigem Material eine Antenne mit einer vergleichsweise hohen Induktivität und vergleichsweise niedrigen Kapazität (durch die serielle Schaltung der TeilKapazitäten) erzielen, welche den oben beschriebenen Anforderungen besonders gerecht wird. Besonders vorteilhaft ist hier weiter auch die Verwendung einer Trägerschicht aus einem Material mit hoher Dielektrizitätskonstante, wie beilspielsweise Polycarbonat (PC).

Besonders vorteilhaft ist es weiter, dass in dem Bereich, in dem der erste Leiterbahnabschnitt zwei Teilabschnitte des zweiten Leiterbahnabschnitts überdeckt, der Abstand zwischen den beiden Teilabschnitten des zweiten Leiterbahnabschnitts um mindestens den Wert r geringer als die Breite des ersten Leiterbahnabschnitts ist und weiter vorzugsweise in diesem Bereich die Summe der Breiten der beiden Teilabschnitte des zweiten Leiterbahnabschnitts und des Abstands zwischen den Teilabschnitten um mindestens den Wert r größer als die Breite des ersten Leiterbahnabschnitts ist, wobei r $\geq$ 100 $\mu$m ist. Weiter ist die Breite jedes Teilabschnittes bevorzugt größer oder gleich dem Wert r zu wählen. Durch diese spezielle Ausgestaltung der ersten und zweiten spulenförmigen Leiterbahn in diesem Bereich und die spezielle Anordnung der ersten und zweiten spulenförmigen Leiterbahn in diesem Bereich zueinander wird der Vorteil erzielt, dass eventuell während des Herstellungsprozesses auftretenden Registerabweichungen bei der Aufbringung und Strukturierung der ersten und zweiten elektrisch leitfähigen Schicht abgefangen werden und somit - bei insgesamt auch weiter vermindertem Materialverbrauch an elektrisch leitfähigem Material - die Ausschussrate deutlich gesenkt werden kann.

Gemäß eines weiteren bevorzugten Ausführungsbeispiels überdecken sich in einem t Windungen des ersten Leiterbahnabschnitts umfassenden Bereich die ersten und zweite Leiterbahnabschnitte entlang des ersten Leiterbahnabschnitts teilweise und die Außendurchmesser der jeweiligen Windungen der ersten spulenförmigen Leiterbahn und der zweiten spulenförmigen Leiterbahn unterscheiden sich entlang des ersten Leiterbahnabschnitts um den Wert r, bevorzugt in mindestens einer ersten Richtung um den Wert r, wobei die mindestens eine erste Richtung in der von der Trägerschicht aufgespannten Ebene liegt. Dies bedeutet, dass in diesem Bereich für jeden Punkt des ersten Leiterbahnabschnitts in diesem Bereich, in dem sich der erste und zweite Leiterbahnabschnitt überdecken, die oben genannte Bedingung gilt, d.h. die diesem Punkt zuzuordnende Windung der ersten spulenförmigen Leiterbahn und die diesem Punkt zuzuordnende Windung der zweiten spulenförmigen Leiterbahn Außendurchmesser besitzen, die sich um den Wert r unterscheiden. Hierdurch wird erreicht, dass sich der erste und zweite Leiterbahnabschnitt auf der einen Seite des Folienelements teilweise überlappen und auf der in Richtung der ersten Richtung hierzu gelegenen gegenüberliegenden Seite des Folienelements ebenfalls teilweise überlappen und die Überlappung hierbei in Bezug auf die erste Richtung invers ist. Bei einer relativen Verschiebung der ersten und zweiten spulenförmigen Leiterbahn zueinander in Richtung der ersten Richtung wird somit auf der einen Seite das Folienelement die Überlappung des ersten und zweiten Leiterbahnabschnitts geringer und auf der anderen Seite des Folienelements die Überlappung der beiden Leiterbahnabschnitte größer. Da sich die durch die Überlagerung gebildeten Teilkapazitäten additiv überlagern, bleibt somit trotz der relativen Verschiebung der ersten und zweiten Leiterbahn in Richtung der ersten Richtung zueinander die Gesamtkapazität gleich. Durch die spezielle Wahl der Breite des ersten und zweiten Leiterbahnabschnitts in den Bereichen, in denen sich die ersten und zweiten Leiterbahnabschnitte im obigen Sinne teilweise überlagern, wird weiter erreicht, dass bei einer relativen Verschiebung der ersten und zweiten spulenförmigen Leiterbahnen um den Wert r in der ersten Richtung zueinander der obige Effekt gewahrt bleibt und sich somit die Gesamtkapazität der Antenne nicht ändert.

Vorzugsweise weist das Folienelement hierbei nicht nur in zwei spiegelsymmetrisch zueinander liegenden Bereichen die wie oben dargelegte Überlappung der ersten und zweiten spulenförmigen Leiterbahn auf, sondern der erste und zweite Leiterbahnabschnitt überlappt sich über die gesamte Länge des ersten Leiterbahnabschnitts in der oben beschriebenen Art und Weise. Dies bedeutet, dass sich der erste und zweite Leiterbahnabschnitt teilweise derart überlappen, dass entlang des ersten Leiterbahnabschnitts die Außenkonturen des ersten und zweiten Leiterbahnabschnitts, d.h. die dem Rand des Folienelements zugewandten Konturen, stets um mindestens den Wert r voneinander entfernt sind und die Breite des ersten und zweiten Leiterbahnabschnitts größer als 2r ist. Der erste und zweite Leiterbahnabschnitt besteht somit vorzugsweise aus einer spulenförmigen Struktur, wobei die sich bereichsweise überdeckenden Windungen der spulenförmigen Struktur so gewählt sind, dass die Außendurchmesser der Windungen sich vorzugsweise an jeder Stelle der spulenförmigen Strukturen sich um mindestens den Wert r unterscheiden und die Leiterbahnbreite der spulenförmigen Struktur größer als das zweifache des Wertes r ist.

Weiter ist bevorzugt, dass die Breite der spulenförmigen Leiterbahn mit dem größeren Außendurchmesser der jeweiligen Windung kleiner oder gleich der Breite der spulenförmigen Leiterbahn mit dem kleineren Außendurchmesser der jeweiligen Windung ist. Hierdurch wird weiter sichergestellt, dass der oben beschriebene Effekt, dass sich die Gesamtkapazität bei Verschiebung der spulenförmigen Leiterbahnen zueinander nicht ändert, über einen möglichst breiten Bereich gewährleistet wird.

Die oben beschriebenen vorteilhaften Ausführungsförmen können auch miteinander kombiniert werden. So ist es beispielsweise möglich, dass der erste und zweite Leiterbahnabschnitt so ausgebildet ist, dass er mehrere der oben angeführten Bedingungen erfüllt. Weiter ist es auch möglich, dass die erste und zweite spulenförmige Leiterbahn mehrere erste bzw. zweite Leiterbahnabschnitte besitzt, die gemäß unterschiedlichen der oben angeführten vorteilhaften Ausführungsformen ausgebildet sind.

Besonders vorteilhaft ist weiter, t kleiner als 3 auszuwählen, $t \geq \frac{1}{4}$ zu wählen und/oder t aus dem Bereich $\frac{3}{4}$ bis 1 auszuwählen.

Weiter ist es besonders vorteilhaft, r kleiner als 500 $\mu$m, insbesondere kleiner als 400 $\mu$m zu wählen und r insbesondere aus dem Bereich von 200 $\mu$m bis 400 $\mu$m auszuwählen.

Die erste spulenförmige Leiterbahn und die zweite spulenförmige Leiterbahn besitzen vorzugsweise die selbe Windungsrichtung. Hierdurch lassen sich die oben angeführten Vorteile besonders gut erzielen.

Gemäß eines weiteren bevorzugten Ausführungsbeispiel der Erfindung ist die erste und/oder zweite Leiterbahn im ersten Leiterbahnabschnitt und/oder im zweiten Leiterbahnabschnitt substrukturiert, insbesondere zickzackförmig oder wellenlinienförmig substrukturiert. Durch diese Substrukturierung wird der Widerstandswert der ersten und/oder zweiten Leiterbahn selektiv beeinflusst, um so beispielsweise die Bandbreite der Antenne zu erhöhen. Hierbei ist es auch möglich, dass der substrukturierte erste oder zweite Leiterbahnabschnitt zwei oder mehrere, insbesondere auch drei oder mehrere unterschiedliche Windungen der zweiten bzw. ersten spulenförmigen Struktur zugeordneten Leiterbahnabschnitt bereichsweise überdeckt und sich insbesondere über diese erstreckt.

Besonders vorteilhaft ist es, die erste und/oder zweite Leiterbahn im ersten Leiterbahnabschnitt und/oder im zweiten Leiterbahnabschnitt gemäß einer periodischen Substrukturierungsfunktion zu substrukturieren, wobei die Periode der Substrukturierungsfunktion kleiner als 10 mm, insbesondere kleiner als 5 mm gewählt wird. Hierdurch wird der Vorteil erzielt, dass Registerschwankungen beim Herstellungsprozess weitgehend abgefangen werden und die Resonanzfrequenz und/oder Bandbreite der Antenne nicht oder nur unwesentlich beeinflussen.

Als Substrukturierungsfunktion wird vorzugsweise hierbei eine Dreiecksfunktion oder sinusförmige Funktion gewählt. Die Formgestaltung der ersten und/oder zweiten spulenförmigen Leiterbahn ergibt sich somit durch additive oder multiplikative Überlagerung einer Makrofunktion, welche die Grobstrukturierung der spulenförmigen Leiterbahn beschreibt und beispielsweise eine Spirale mit einer speziellen vorgegebenen Breite definiert und der Substrukturierungsfunktion.

Besonders vorteilhaft ist hierbei, wenn die Substrukturierungsfunktion die Abweichung einer oder beider Außenkonturen der spulenförmigen Leiterbahn von der Grobstruktur variiert. Die Amplitude der Substrukturierungsfunktion beträgt hierbei vorzugsweise zwischen 1 mm und 10 mm, weiter bevorzugt zwischen 1.5 mm und 5 mm. Unter Amplitude wird hierbei insbesondere die durch die Substrukturierungsfunktion verursachte maximale Abweichung der Außenkontur oder der Außenkonturen der ersten und/oder zweiten spulenförmigen Leiterbahn von der Grobstruktur bzw. dem über eine Periode gemittelten Wert verstanden.

Gemäß eines bevorzugten Ausführungsbeispiels der Erfindung wird die erste elektrisch leitfähige Schicht auf eine erste Oberfläche der Trägerschicht und die zweite elektrisch leitfähige Schicht auf eine der ersten Oberfläche gegenüberliegende zweite Oberfläche der Trägerschicht aufgebracht. Zur Aufbringung und/oder Strukturierung der ersten und zweiten elektrisch leitfähigen Schicht werden hierbei vorzugsweise miteinander synchronisierte Verfahren eingesetzt.

Besonders vorteilhaft ist hierbei, wenn in einem ersten Schritt auf die erste und die zweite Oberfläche jeweils eine strukturierte elektrisch leitfähige Grundschicht aufgebracht wird und sodann in einem Galvanik-Bad auf jede der Grundschichten eine galvanische Verstärkungsschicht aufgebracht wird. Das Galvanikbad kann dabei stromlos oder auch strombehaftet sein. Die elektrisch leitfähige Grundschicht wird hierbei vorzugsweise mittels eines Druckverfahrens strukturiert. So ist es beispielsweise möglich, dass ein leitfähiges Material, beispielsweise eine leitfähige Tinte, in den Bereichen auf die erste und zweite Oberfläche des Trägersubstrats aufgedruckt wird, in denen später in der ersten und zweiten elektrisch leitfähigen Schicht die erste Leiterbahn bzw. die zweite Leiterbahn ausgeformt sein sollen. Im weiteren ist es auch möglich, dass die Grundschicht in einem ersten Schritt vollflächig auf die erste und zweite Oberfläche der Trägerschicht aufgebracht wird, z.B. mittels Bedampfung als dünne Metallschicht, und sodann ein Ätz-Resist in den Bereichen aufgedruckt wird, in denen die erste oder zweite Leiterbahn in der erste und zweiten elektrisch leitfähigen Schicht ausgeformt werden soll. Anschließend wird die Grundschicht in den nicht mit dem Ätz-Resist bedeckten Bereichen mittels eines Ätz-Mittels, beispielsweise einer Lauge, entfernt und anschließend der Ätz-Resist ebenfalls entfernt. Weiter ist es auch möglich, die Grundschicht durch Aufdrucken eines Ätzmittels auf die vollflächige Grundschicht oder Aufdrucken einer Waschmaske vor Aufbringen der vollflächigen Grundschicht zu strukturieren oder auf eine elektrisch leitfähige Grundschicht in den Bereichen, in denen in der ersten und zweiten leitfähigen Schicht keine elektrisch leitfähigen Bereich ausgeformt sein sollen, eine dielektrische Sperrschicht aufzudrucken, welche die galvanische Anlagerung der galvanischen Verstärkungsschicht in diesen Bereichen verhindert.

Das Aufbringen der leitfähigen Druckstoffe, der Ätz-Resistschicht, des Ätzmittels und der dielektrischen Sperrschicht erfolgt hierbei vorzugsweise mittels zweier miteinander synchronisierter Druckwerke, wobei das eine Druckwerk die erste Oberfläche der Trägerschicht und das zweite Druckwerk die gegenüberliegende zweite Oberfläche der Trägerschicht bedruckt. Die Druckwerke sind hierbei bevorzugt einander gegenüberliegend auf unterschiedlichen Seiten der Trägerschicht angeordnet und über mechanische oder elektrische Mittel miteinander verkoppelt. Als Druckverfahren werden hierbei vorzugsweise Tiefdruck, Offset-Druck, Siebdruck, Tampon-Druck oder Tintenstrahldruck eingesetzt.

Durch diese Vorgehensweise wird zum einen eine kostengünstige registrierte Strukturierung der ersten und zweiten elektrisch leitfähigen Schicht erzielt. Weiter ist es hierdurch möglich, die galvanischen Verstärkungsschichten der ersten und zweiten elektrisch leitfähigen Schicht gleichzeitig in einem gemeinsamen Galvanik-Prozess zu fertigen, wodurch zum einen die Produktionskosten und die Produktionszeit verringert werden kann und zum anderen Durchkontaktierungen zur Verbindung der leitfähigen Schichten durch die Trägerschicht ohne zusätzliche Aufwendungen mitgefertigt werden können, und somit die hierzu notwendigen Prozessschritte eingespart werden können.

Gemäß eines bevorzugten Ausführungsbeispiels der Erfindung weist die erste Leiterbahn einen dritten Leiterbahnabschnitt auf, der vorzugsweise an den ersten Leiterbahnabschnitt angrenzt. Die Leiterbahnbreite des dritten Leiterbahnabschnitts ist hierbei geringer als die Leiterbahnbreite des ersten Leiterbahnabschnitts, vorzugsweise um mindestens 100 $\mu$m geringer als die Leiterbahnbreite des ersten Leiterbahnabschnitts. Es hat sich überraschend gezeigt, dass bei einer derartigen Ausgestaltung der ersten Leiterbahn weitere Einsparungen an elektrisch leitfähigem Material möglich sind, ohne den Qualitätsfaktor der Antennenstruktur merklich zu verringern. Damit wird das Verhältnis Qualitätsfaktor zu eingesetzter Menge an elektrisch leitfähigem Material durch diese Maßnahme weiter verbessert.

Weiter hat sich gezeigt, dass dieses Verhältnis weiter dadurch optimiert werden kann, dass die Leiterbahnbreite des dritten Leiterbahnabschnitts zwischen 10% und 50% der Leiterbahnbreite des ersten Leiterbahnabschnitts beträgt und/oder der dritte Leiterbahnabschnitt mindestens eine Windung der ersten spulenförmigen Leiterbahn umfasst, weiter bevorzugt zwischen 1 und 3 Windungen der ersten spulenförmigen Leiterbahn umfasst. Weiter bevorzugt umfasst der dritte Leiterbahnabschnitt mindestens 1 Windungen der ersten spulenförmigen Leiterbahn und/oder der erste Leiterbahnabschnitt umfasst höchstens 3 Windungen der ersten spulenförmigen Leiterbahn, vorzugsweise zwischen 1 und 2 Windungen der ersten spulenförmigen Leiterbahn.

Weiter ist es von Vorteil, wenn der dritte Leiterbahnabschnitt in Bezug auf die spulenförmige Ausbildung der ersten Leiterbahn als innerer Leiterbahnabschnitt an den ersten Leiterbahnabschnitt anschließt. Dies bedeutet, dass der erste Leiterbahnabschnitt die äußeren Windungen der ersten Leiterbahn umfasst und der dritte Leiterbahnabschnitt die inneren Windungen der ersten Leiterbahn umfasst. Vorzugsweise umfasst hierbei der erste Leiterbahnabschnitt die äußere dreiviertel Windung der ersten spulenförmigen Leiterbahn. Untersuchungen haben gezeigt, dass durch eine derartige Anordnung von erstem und drittem Leiterbahnabschnitt gegenüber einer umgekehrten Anordnung (dritter Leiterbahnabschnitt bildet äußeren Leiterbahnabschnitt, erster Leiterbahnabschnitt bildet inneren Leiterbahnabschnitt) Vorteile bezüglich des Verhältnisses von Qualitätsfaktor zu eingesetzter Menge an elektrisch leitfähigem Material aufweist.

Der erste Leiterbahnabschnitt weist vorzugsweise eine Leiterbahnbreite von 0,5 bis 5 mm, weiter bevorzugt von 1 bis 2 mm auf.

Vorzugsweise besitzt das erfindungsgemäße Folienelement eine im wesentlichen rechteckförmige Formgebung und die erste Richtung entspricht der Längsrichtung der Trägerschicht, d.h. der Richtung der längeren Abmessung der Trägerschicht.

Die Schichtdicke der ersten und zweiten elektrisch leitfähigen Schicht beträgt vorzugsweise zwischen 1 und 18 $\mu$m, weiter bevorzugt zwischen 4 und 12 $\mu$m. Die Schichtdicke der ersten und/ oder zweiten elektrisch leitfähigen Schicht kann hierbei konstant oder nicht konstant sein. Insbesondere ist es von Vorteil, wenn die Schichtdicke der ersten elektrisch leitfähigen Schicht größer als die Schichtdicke der zweiten elektrisch leitfähigen Schicht ist.

Gemäß eines bevorzugten Ausführungsbeispiels der Erfindung sind in der ersten und/oder der zweiten elektrisch leitfähigen Schicht eine erste und eine zweite Elektrodenfläche ausgebildet, die jeweils mit der ersten und/oder zweiten Leiterbahn elektrisch verbunden sind. Vorzugsweise sind die erste und die zweite Leiterbahn hierbei über mindestens eine elektrisch leitfähige Durchkontaktierung durch die Trägerschicht miteinander verbunden und/oder kapazitiv oder induktiv miteinander gekoppelt.

Weitere Vorteile werden dadurch erzielt, dass sowohl in der ersten als auch in der zweiten elektrisch leitfähigen Schicht eine erste und eine zweite Elektrodenfläche ausgebildet sind, wobei die ersten Elektrodenflächen sich zumindest teilweise überdecken und über eine elektrisch leitfähige Durchkontaktierung miteinander verbunden sind und auch die zweiten Elektrodenflächen sich zumindest teilweise überdecken und über eine elektrisch leitfähige Durchkontaktierung miteinander verbunden sind. Durch eine derartige Ausgestaltung der ersten und zweiten elektrisch leitfähigen Schicht werden die Einsatzmöglichkeiten des Folienelements durch die sich so ergebenden Synergieeffekte bei nur geringem Materialmehraufwand deutlich vergrößert.

Vorzugsweise weisen die erste und/oder zweite Leiterbahn jeweils zwischen eine und vier Windungen, vorzugsweise zwischen eine und zwei Windungen auf.

Weiter ist die erste Elektrodenfläche vorzugsweise mit der ersten Leiterbahn und die zweite Elektrodenfläche mit der zweiten Leiterbahn verbunden.

Weiter ist es möglich, dass in der ersten und/oder in der zweiten elektrisch leitfähigen Schicht eine dritte Leiterbahn ausgeformt ist, die mit der ersten oder zweiten Elektrodenfläche verbunden ist und die kapazitiv und/oder induktiv mit der ersten und/oder zweiten Leiterbahn gekoppelt ist. Diese dritte Leiterbahn erstreckt sich vorzugsweise über mindestens 40 % der Breite des Folienelements. Die dritte Leiterbahn ist hierbei vorzugsweise benachbart zu einem Teilbereich des ersten Leiterbahnabschnitts angeordnet.

Die ersten oder zweiten Elektrodenflächen sind vorzugsweise so ausgeformt und angeordnet, dass ein auf dem mehrschichtigen Folienelement angeordneter oder in das mehrschichtige Folienelement integrierter elektrischer Schaltkreis elektrisch mit der ersten und zweiten Elektrodenfläche verbunden werden kann. Die Elektrodenflächen weisen somit bevorzugt eine Größe von jeweils mindestens 2 mm$^2$ auf und sind in einer Ecke des Folienelements angeordnet. Hierdurch ist es möglich, in dem zentralen Bereich des Folienelements Prägung oder weitere mechanische oder thermische den Folienkörper stark beanspruchende Bearbeitungsprozesse durchzuführen.

Die Schichtdicke der Trägerschicht beträgt vorzugsweise zwischen 250 und 12 $\mu$m, weiter bevorzugt zwischen 75 und 50 $\mu$m. Die Trägerschicht besteht hierbei vorzugsweise aus einer Kunststofffolie. Weiter ist es auch möglich, dass die Trägerschicht mehrschichtig ausgebildet ist und beispielsweise aus einer Kunststofffolie und ein oder mehreren Dekorschichten besteht.

Gemäß eines bevorzugten Ausführungsbeispiels der Erfindung sind zwischen der ersten und zweiten Leiterbahn und/oder auf der von der Trägerschicht abgewandten Seite der ersten und/oder zweiten Leiterbahn eine Dekorschicht angeordnet. Durch diese Dekorschicht wird bevorzugt in Verbindung mit der erste und/oder zweiten elektrisch leitfähigen Schicht ein optisch variables Sicherheitselement bereitgestellt. Die Dekorschicht weist so vorzugsweise eine einen optisch variablen Effekt generierende Schicht auf, beispielsweise eine Schicht mit einem mikroskopischen oder makroskopischen Oberflächenrelief, insbesondere einem beugungsoptisch wirksamen Oberflächenrelief oder einem Oberflächenrelief in Form von Linsenstrukturen, Mattstrukturen, asymmetrischen Strukturen oder Blaze-Gittern, eine Dünnfilmschicht, welche blickwinkelabhängige Farbverschiebungseffekte aufgrund von Interferenzeffekten generiert, eine Flüssigkristallschicht, vorzugsweise eine cholesterische Flüssigkristallschicht, oder eine Schicht mit optisch aktiven Pigmenten, insbesondere Effekt-Pigmenten, UV- oder IR-aktivierbaren Pigmenten, auf. Die erste und/oder zweite elektrisch leitfähige Schicht erbringt vorzugsweise weiter auch eine Funktion bei der Genierung eines optisch erkennbaren Sicherheitsmerkmals, beispielsweise als Reflexionsschicht, welche den von der Dekorschicht generierten optisch variablen Effekt verstärkt oder mit generiert. Es ist somit vorteilhaft, die Dekorschicht derart in dem Folienelement anzuordnen, dass sie die erste und/oder zweite Leiterbahn zumindest teilweise überdeckt und somit die von der Dekorschicht und von der ersten und/oder zweiten elektrisch leitfähigen Schicht im Bereich der ersten und/oder zweiten Leiterbahn generierten optischen Effekte zusammenwirken und sich überlagern.

Im Folgenden wird die Erfindung anhand von mehreren Ausführungsbeispielen unter Zuhilfenahme der beiliegenden Zeichnung beispielhaft erläutert.

Fig. 1 und Fig. 2          zeigen schematische, nicht maßstabsgetreue Schnittdarstellungen von Folienkörpern zur Erläuterung des erfindungsgemäßen Verfahrens zur Herstellung eines mehrschichtigen Folienelements.

Fig. 3        zeigt eine schematische, nicht maßstabsgetreue Schnittdarstellung eines erfindungsgemäßen Folienelements für ein erstes Ausführungsbeispiel der Erfindung.

Fig. 4        zeigt eine schematische, nicht maßstabsgetreue Schnittdarstellung eines erfindungsgemäßen Folienelements für ein weiteres Ausführungsbeispiel der Erfindung.

Fig. 5        zeigt eine Darstellung zur Verdeutlichung der Strukturierung einer ersten elektrisch leitfähigen Schicht des Folienelements nach Fig. 3.

Fig. 6        zeigt eine Darstellung zur Verdeutlichung der Strukturierung einer zweiten elektrisch leitfähigen Schicht des Folienelements nach Fig. 3.

Fig. 7        zeigt eine Darstellung zur Verdeutlichung der gegenseitigen Überdeckung der ersten und zweiten elektrisch leitfähigen Schicht des Folienelements nach Fig. 3.

Fig. 8a und Fig. 8b        zeigen Darstellungen zur Verdeutlichung der gegenseitigen Überdeckung der ersten und zweiten elektrisch leitfähigen Schicht des Folienelements nach Fig. 3 für ein weiteres Ausführungsbeispiel.

Fig. 9a und 9b        zeigen Darstellungen zur Verdeutlichung der gegenseitigen Überdeckung der ersten und zweiten elektrisch leitfähigen Schicht des Folienelements nach Fig. 3 für ein weiteres Ausführungsbeispiel.

Fig. 10a und Fig. 10b        zeigen schematische Darstellungen einer Draufsicht auf die Oberseite bzw. Unterseite eines Folienelements nach Fig. 3 gemäß eines weiteren Ausführungsbeispiels.

Fig. 11a und Fig. 11b        zeigen Darstellungen zur Verdeutlichung der gegenseitigen Überdeckung der ersten und zweiten elektrisch leitfähigen Schicht für das Ausführungsbeispiel nach Fig. 10a und Fig. 10b.

Fig. 12a u. Fig. 12b        zeigen Darstellungen zur Verdeutlichung der gegenseitigen Überdeckung der ersten und zweiten elektrisch leitfähigen Schicht des Folienelements nach Fig. 3 für ein weiteres Ausführungsbeispiel.

Fig. 13a und Fig. 13b        zeigen Darstellungen zur Verdeutlichung der gegenseitigen Überdeckung der ersten und zweiten elektrisch leitfähigen Schicht des Folienelements nach Fig. 3 für ein weiteres Ausführungsbeispiel.

Fig. 14a und Fig. 14b        zeigen Darstellungen zur Verdeutlichung der gegenseitigen Überdeckung der ersten und zweiten elektrisch leitfähigen Schicht des Folienelements nach Fig. 3 für ein weiteres Ausführungsbeispiel.

Fig. 15a bis Fig. 15d        zeigen Darstellungen zur Verdeutlichung der gegenseitigen Überdeckung der ersten und zweiten elektrisch leitfähigen Schicht des Folienelements nach Fig. 3 für weitere Ausführungsbeispiele.

Fig. 16a und Fig. 16b        zeigen Darstellungen zur Verdeutlichung der gegenseitigen Überdeckung der ersten und zweiten elektrisch leitfähigen Schicht des Folienelements nach Fig. 3 für ein weiteres Ausführungsbeispiel.

Fig. 17a und Fig. 17b        zeigen Darstellungen zur Verdeutlichung der gegenseitigen Überdeckung der ersten und zweiten elektrisch leitfähigen Schicht des Folienelements nach Fig. 3 für ein weiteres Ausführungsbeispiel.

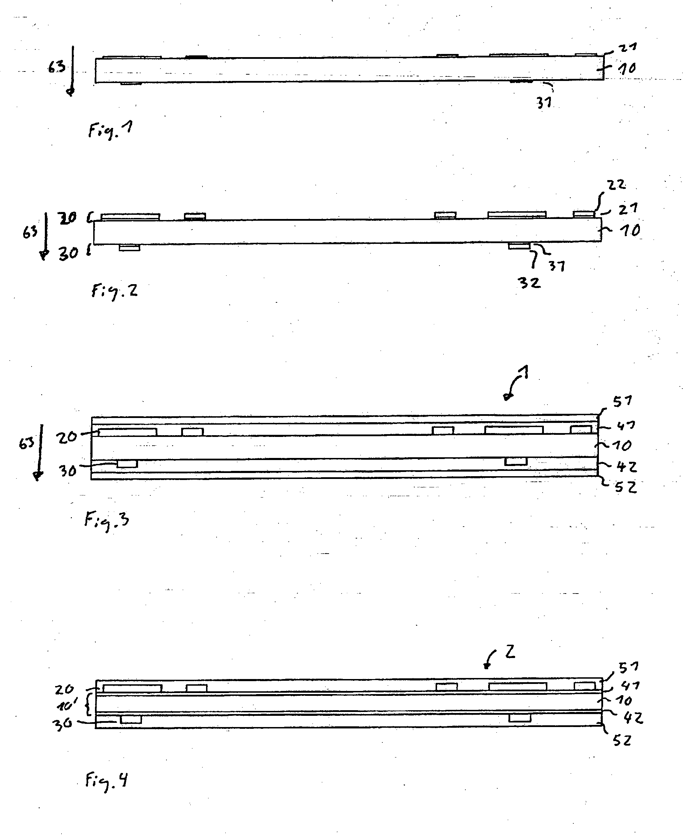

Fig. 3 zeigt ein mehrschichtiges Folienelement 1 mit einer Trägerschicht 10, einer elektrisch leitfähigen Schicht 20, einer Dekorschicht 41, einer Schutzschicht 51, einer elektrisch leitfähigen Schicht 30, einer Dekorschicht 42 und einer Schutzschicht 52.

Die Trägerschicht 10 wird von einer Kunststofffolie, vorzugsweise einer PET-, PET-G, PVC-, ABS-, Polycarbonat- oder einer BOPP-Folie, synthetisches Papier oder ein Laminatverbund von zwei oder mehreren solche Schichten mit einer Dicke zwischen 12 und 250 $\mu$m, vorzugsweise zwischen 50 und 75 $\mu$m gebildet. Die Trägerschicht 10 besteht hierbei vorzugsweise aus einer transparenten Kunststofffolie. Von Bedeutung ist hier weiter, dass die Dicke der Trägerschicht 10 und damit die Beabstandung der elektrisch leitfähigen Schichten 20 und 30 nicht größer als 800 $\mu$m ist, um eine ausreichende kapazitive Kopplung der elektrisch leitfähigen Schichten 20 und 30 zu erzielen, wie weiter unten erläutert.

Bei den Schutzschichten 51 und 52 handelt es sich um Schutzlackschichten einer Dicke von 1 bis 5 $\mu$m. Es ist jedoch auch möglich, dass es sich bei den Schutzschichten 51 und 52 um eine Kunststofffolie, synthetisches Papier oder ein Laminatverbund von beiden, mit einer Dicke zwischen 12 und 100 $\mu$m, bevorzugt von 50 $\mu$m handelt.

Bei den Dekorschichten 41 und 42 handelt es sich im einfachsten Fall wenigstens in eine Teilbereich um musterförmig ausgeformte Farblackschichten. Es ist jedoch auch möglich, dass die Dekorschichten 41 und 42 ein oder mehrere optisch variable Effekte zeigen, welche als Sicherheitsmerkmal dienen. So ist es beispielsweise möglich, dass die Dekorschichten 41 und 42 aus einem Bindemittel mit optisch aktiven Pigmenten, insbesondere Effektpigmenten wie Dünnfilmschicht-Pigmenten oder Flüssigkristallpigmenten, oder UV- oder IR-aktivierbare, lumineszente Pigmente, besteht. Auch in diesem Fall sind die Dekorschichten 41 und 42 bevorzugt musterförmig ausgestaltet und zeigen hierbei bevorzugt auch unterschiedliche Darstellungen.

Im weiteren ist es auch möglich, dass die Dekorschichten 41 und 42 jeweils aus unterschiedlichen Schichten bestehen, welche zusammenwirken und so einen optisch variablen Effekt generieren. So ist es beispielsweise möglich, dass die Dekorschichten 41 und 42 ein Dünnfilmschichtsystem aufweisen, welches ein oder mehrere Distanzschichten mit einer optisch wirksamen Dicke von $\lambda\backslash4$ und $\lambda\backslash2$ aufweisen, wobei $\lambda$ im Wellenlängenbereich des für den menschlichen Betrachter sichtbaren Lichts liegen, und die damit einen für den Betrachter wahrnehmbaren Farbwechseleffekt generieren. Ein solches Dünnfilmschichtsystem ist beispielsweise aus einer vorzugsweise dünnen metallischen Absorptionsschicht, einer vorzugsweise dielektrischen Distanzschicht und aus einer Reflexionsschicht aufgebaut, wobei die Reflexionsschicht hierbei vorzugsweise von der elektrisch leitfähigen Schicht 20 bzw. 30 gebildet wird. Die elektrisch leitfähigen Schichten 20 und 30 bilden in diesem Fall einen integralen Bestandteil des den Farbwechsel erzeugenden optischen Schichtsystem, sodass die elektrisch leitfähigen Schichten 20 und 30 eine Doppelfunktion erbringen, wodurch die Fälschungssicherheit erheblich erhöht wird.

In gleicher Weise können die elektrisch leitfähigen Schichten 20 und 30 auch mit anders ausgestalteten Schichten der Dekorschichten 41 und 42 zur Generierung eines optisch variablen Effekts zusammenwirken und somit die Fälschungssicherheit weiter erhöhen. So ist es beispielsweise möglich, dass die Dekorschichten 41 und 42 eine Replizierlackschicht aufweisen, in die mittels UV-Replikation oder mittels eines beheizten Prägestempels (thermische Replikation) ein optisch aktives Oberflächenrelief abgeformt ist, und die elektrisch leitfähigen Schichten 20 und 30 als Reflexionsschichten mit diesem Oberflächenrelief zusammenwirken, sodass in dem Bereich, in dem die elektrisch leitfähigen Schichten 20 und 30 vorgesehen sind, ein entsprechender optisch variabler Effekt generiert wird. Vorzugsweise handelt es sich bei dem optisch aktiven Oberflächenrelief um ein diffraktives Oberflächenrelief, beispielsweise ein Hologramm, um eine Mikrolinsenstruktur (Mikrolinsen mit einem Durchmesser von weniger als 300 $\mu$m, insbesondere von weniger als 50 $\mu$m), einer Mattstruktur oder einem Blaze-Gitter. Weiter ist es auch möglich, dass die Dekorschichten 41 und 42 eine Volumenhologrammschicht aufweisen, in der ein Volumenhologramm eingeschrieben ist, oder dass die Dekorschichten 41 und 42 eine orientierte und vernetzte Flüssigkristallschicht aufweisen, die beispielsweise in verschiedenen Bereichen unterschiedlich orientiert ist, wodurch das einfallende Licht in verschiedenen Bereichen unterschiedlich polarisiert wird. Weiter kann auch ein cholesterisches Flüssigkristallmaterial verwendet werden, welches aufgrund seiner helikalen Struktur ebenfalls einen blickwinkelabhängigen Farbverschiebungseffekt zeigt.

Bei den elektrisch leitfähigen Schichten 20 und 30 handelt es sich vorzugsweise um Schichten bestehend oder enthaltend ein metallisches, elektrisch leitfähiges Material, beispielsweise Aluminium, Kupfer, Silber, Chrom, Gold oder eine Metalllegierung. Weiter ist es auch möglich, dass die elektrisch leitfähigen Schichten 20 und 30 aus einem anderen elektrisch leitfähigen Material bestehen oder ein solches enthalten, beispielsweise ein elektrisch leitfähiges Polymer oder ein transparentes, elektrisch leitfähiges Material, beispielsweise ITO.

Die Herstellung der elektrisch leitfähigen Schichten 20 und 30 sowie deren Ausgestaltung wird im Folgenden anhand der Figuren Fig. 1, Fig. 2, Fig. 5, Fig. 6 und Fig. 7 erläutert.

Zur Herstellung der elektrisch leitfähigen Schichten wird in einem ersten Schritt eine elektrisch leitfähige Grundschicht auf die Trägerschicht 10 aufgebracht. So zeigt Fig. 1 die Trägerschicht 10, auf deren einen Oberfläche eine Grundschicht 21 und auf deren gegenüberliegender anderen Oberfläche die Grundschicht 31 aufgebracht ist.

Die Grundschichten 21 und 31 bestehen hierbei vorzugsweise aus einem elektrisch leitfähigen Druckstoff, beispielsweise aus einer Metallpartikel, insbesondere Silberpartikel, enthaltenden elektrisch leitfähigen Tinte. Die Grundschichten 21 und 31 werden hierbei auf die Trägerschicht 10 mittels eines Druckverfahren aufgedruckt, vorzugsweise mittels eines Tiefdruckverfahren in einem Auftragdicke von zwischen 0,5 und 5 $\mu$m aufgedruckt und sodann getrocknet.

Vorzugsweise erfolgt das Aufdrucken der Grundschichten 21 und 31 hierbei mittels zweier synchronisierter Druckwerke, wobei das eine Druckwerk auf der einen Seite der Trägerschicht 10 angeordnet ist und das zweite Druckwerk gegenüberliegend zum ersten Druckwerk auf der anderen Seite der Trägerschicht 10 angeordnet ist. Die Synchronisation der beiden Druckwerke erfolgt durch eine mechanische Kopplung der Druckwerke oder durch eine entsprechende elektrische Kopplung, d.h. Austausch entsprechender Synchronisationsdaten. Durch diese Vorgehensweise wird zum einen eine hohe Registergenauigkeit beim Aufdruck der Grundschichten 21 und 31 erzielt und zum anderen eine hohe Produktionsgeschwindigkeit erzielt. Die Dicke der Grundschichten 21 und 31 nach Trocknung beträgt vorzugsweise 0,3 - 3 μm.

In einem zweiten Schritt wird der die Trägerschicht 10 und die Grundschichten 21 und 31 umfassende Folienkörper einer Galvanik-Station zugeführt, in der in dem Bereich, in dem die elektrisch leitfähigen Grundschichten 21 und 31 vorgesehen sind, eine galvanische Verstärkungsschicht durch einen strombehafteten Galvanikprozess abgeschieden wird. Hierzu werden die elektrisch leitfähigen Grundschichten 21 und 31 durch Elektroden kontaktiert und mit einem Spannungspotential beaufschlagt, sodass aus dem Elektrolyt des Galvanik-Bads eine galvanische Verstärkungsschicht 22 bzw. 32 auf den Grundschichten 21 und 31 abgeschieden wird. Das Abscheiden der galvanischen Verstärkungsschichten 32 und 22 erfolgt hierbei vorzugsweise parallel in ein und demselben Galvanik-Bad, wodurch weitere Vorteile erzielt werden, wie bereits oben erläutert.

Vorzugsweise bestehen die galvanischen Verstärkungsschichten 22 und 32 hierbei aus einem metallischen Material, welches sich von dem elektrisch leitfähigen Material der Grundschichten 21 und 31 unterscheidet. Die Schichtdicke der galvanischen Verstärkungsschichten 22 und 32 beträgt vorzugsweise zwischen 0,7 und 15, sodass die Gesamtdicke der elektrisch leitfähigen Schichten 20 und 30 zwischen 1 und 18 beträgt.

Nach einem Reinigungsprozess und einer Trocknung werden sodann die Dekorschichten 41 und 42 und die Schutzlackschichten 51 und 52 aufgebracht und sodann die Folienelemente mit einem anderen Teil des Dokuments integriert oder vorerst durch einen Schneid- oder Stanzprozess vereinzelt.

Auf das Aufbringen ein oder mehrerer der Schichten 41, 42, 51 und 52 kann jedoch auch verzichtet werden.

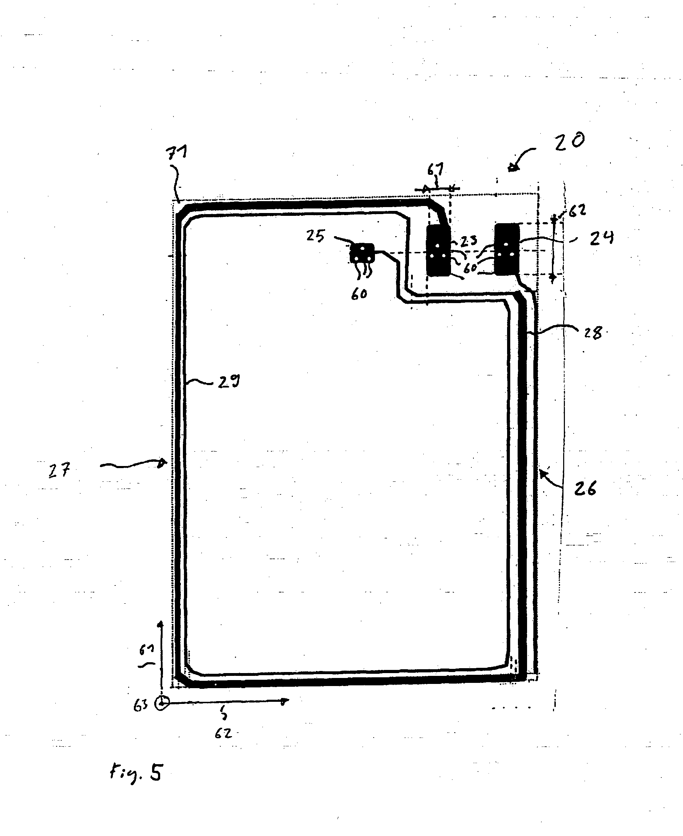

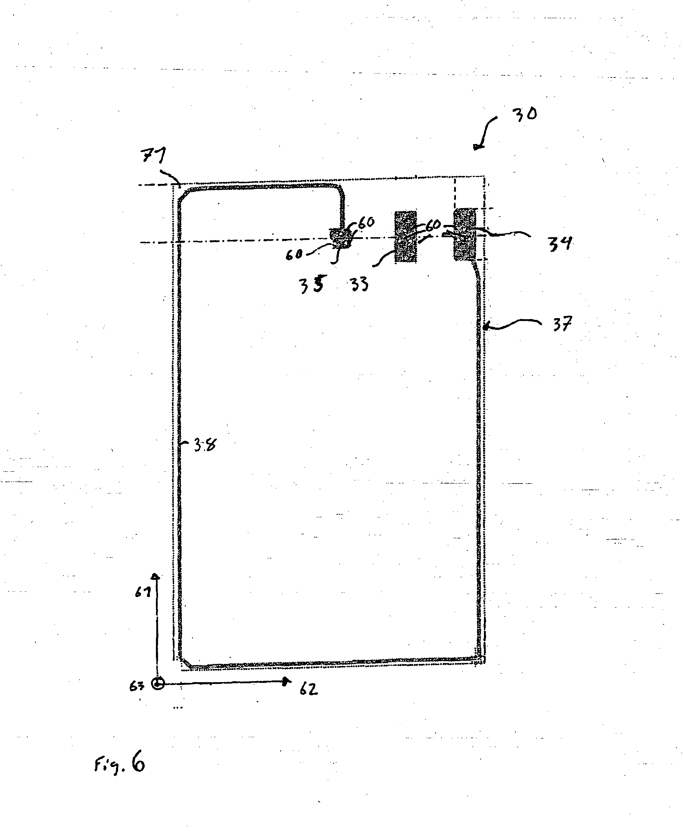

Die Ausformung der elektrisch leitfähigen Schichten 20 und 30 wird hierbei durch den anhand von Fig. 1 beschriebenen Druckprozess gesteuert. Fig. 5 verdeutlicht hierbei die hierdurch erzielte Ausformung der elektrisch leitfähigen Schicht 20 und Fig. 6 die hierdurch erzielte Ausformung der elektrisch leitfähigen Schicht 30.

Wie in Fig. 5 gezeigt, sind in einem Bereich 71 des Folienelements 1 zwei Elektrodenflächen 23 und 24, eine Durchkontaktierungsfläche 25, eine spulenförmige Leiterbahn 27 und eine Leiterbahn 26 aufgeformt. Die spulenförmige Leiterbahn 27 verbindet die Elektrodenfläche 23 mit der Durchkontaktierungsfläche 25. Die Elektrodenfläche 24 ist mit der Leiterbahn 26 verbunden. Weiter sind in der Figur 5 Durchkontaktierungen 60 angedeutet, in denen die Trägerschicht 10 durch eine Ausnehmung durchbrochen ist und die in dem Galvanik-Prozess bei der Aufgalvanisierung der galvanischen Verstärkungsschichten 22 und 32 mit dem galvanischen Material der Verstärkungsschicht verfüllt werden und somit eine elektrisch leitfähige Durchkontaktierung durch die Trägerschicht 10 bereitstellen.

Wie in Fig. 5 gezeigt, weist die spulenförmige Leiterbahn 27 zwei Leiterbahnabschnitte 28 und 29 auf, in denen die Leiterbahn 27 eine unterschiedliche Leiterbahndicke besitzt. Der äußere Leiterbahnabschnitt 28 schließt einerseits an die Elektrodenfläche 23 und andererseits an den inneren Leiterbahnabschnitt 29 an. Der innere Leiterbahnabschnitt 29 schließt einerseits an den äußeren Leiterbahnabschnitt 28 und andererseits an die Durchkontaktierungsfläche 25 an. Die Leiterbahnbreite des äußeren Leiterbahnabschnitts beträgt vorzugsweise 0,5 bis 5 mm, weiter bevorzugt 1 bis 2 mm und die Leiterbahnbreite des inneren Leiterbahnabschnitts 29 ist deutlich geringer als die des äußeren Leiterbahnabschnitts 28, vorzugsweise zwischen 200 und 400 μm geringer als die des äußeren Leiterbahnabschnitts 28. Die Leiterbahnbreite des inneren Leiterbahnabschnitts 29 beträgt so beispielsweise 0,5 mm. Die Leiterbahnbreite der Leiterbahn 26 liegt etwa im Bereich der Leiterbahnbreite des inneren Leiterbahnabschnitts, ist somit vorzugsweise ebenfalls mindestens zwischen 200 und 400 μm geringer als die Leiterbahnbreite des äußeren Leiterbahnabschnitts 28 und beträgt in dem Ausführungsbeispiel nach Fig. 5 ebenfalls etwa 0,5 mm.

Es ist auch möglich auf der Leiterbahn 26 zu verzichten, wie weiter unten erläutert.

In dem Ausführungsbeispiel nach Fig. 5 beträgt die Längenabmessung des äußeren Leiterbahnabschnitts ca. 78 mm und die Breitenabmessung des äußeren Leiterbahnabschnitts etwa 48 mm.

Fig. 6 zeigt nun die Ausformung der elektrisch leitfähigen Schicht 30. Wie in Fig. 6 gezeigt, sind in dem Bereich 71 in der elektrisch leitfähigen Schicht 30 zwei Elektrodenflächen 33 und 34, eine Durchkontaktierungsfläche 35 und eine spulenförmige Leiterbahn 37 ausgeformt. Die spulenförmige Leiterbahn 37 ist einerseits mit der Elektrodenfläche 34 und andererseits mit der Durchkontaktierungsfläche 60 verbunden. Wie in Fig. 6 angedeutet, entspricht die Leiterbahnbreite der Leiterbahn 37 in etwa der Breite des Leiterbahnabschnitts 29 der elektrisch leitfähigen Schicht 20 und ist demnach geringer als die Leiterbahnbreite des Leiterbahnabschnitts 28 der Leiterbahn 27.

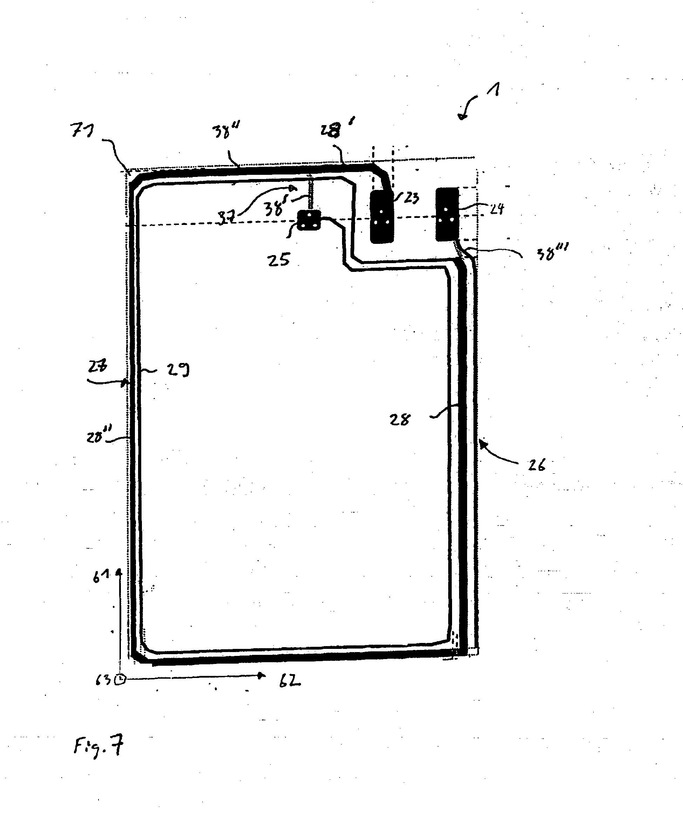

Fig. 7 zeigt nun eine Darstellung, die die Überdeckung der elektrisch leitfähigen Schicht 30 durch die elektrisch leitfähige Schicht 20 in Bezug auf eine senkrecht auf der von der Trägerschicht aufgespannten Ebene stehenden Richtung 63 verdeutlicht, und zwar in Bezug auf eine Betrachtungsrichtung von Seiten der elektrisch leitfähigen Schicht 20.

Wie in den Figuren Fig. 1 bis Fig. 3 und Fig. 5 bis Fig. 7 angedeutet, liegen die elektrisch leitfähigen Schichten 20 und 30 sowie die Trägerschicht 10 in parallel zueinander angeordneten Ebenen, die in einer senkrecht zu der von der Trägerschicht 10 aufgespannten Ebene stehenden Richtung 63 voneinander beabstandet sind. Die elektrisch leitfähigen Schichten 20 und 30 erstrecken sich in zwei aufeinander senkrecht stehenden Richtungen 61 und 62, welche in der von den elektrisch leitfähigen Schichten 20 und 30 sowie von der Trägerschicht 10 aufgespannten, zueinander parallel angeordneten Ebenen liegen. Die elektrisch leitfähigen Schichten 20 und 30 sind hierbei so zueinander ausgerichtet, dass sich bei Betrachtung in Richtung der auf der von der Trägerschicht 10 aufgespannten Ebene senkrecht stehenden Richtung 63 , d.h. bei der in die Richtung 63 orientierten Projektion der leitfähigen Schichten 20 und 30 aufeinander, die in Fig. 7 gezeigte Überdeckung der elektrisch leitfähigen Schichten 20 und 30 in dem Bereich 71 ergibt:

Die Elektrodenflächen 23 und 24 sowie die Durchkontaktierungsfläche 25 überdecken die Elektrodenflächen 33, 34 bzw. die Durchkontaktierungsfläche 35. Im weiteren sind die Elektrodenflächen 23 und 33, die Elektrodenflächen 24 und 34 sowie die Durchkontaktierungsflächen 25 und 35 über die Durchkontaktierungen 60 jeweils elektrisch leitend miteinander verbunden.

Wie oben angedeutet, kann auf die Leiterbahn 26 jedoch verzichtet werden. In diesem Fall verbindet die spulenförmige Leiterbahn 27 vorzugsweise die Elektrodenfläche 24 mit der Durchkontaktierungsfläche 25, und der äußere Leiterbahnabschnitt 28 schließt einerseits an die Elektrodenfläche 24 und andererseits an den inneren Leiterbahnabschnitt 29 an. Im Weiteren ist dann die spulenförmige Leiterbahn 37 einerseits mit der Elektrodenfläche 33 und andererseits mit der Durchkontaktierungsfläche 60 verbunden.

Ein Teilabschnitt des äußeren, breiteren Leiterbahnabschnitts 28 der elektrisch leitfähigen Schicht 20, der Leiterbahnabschnitt 28" überdeckt einen Teilabschnitt des Leiterbahnabschnitts 38 der elektrisch leitfähigen Schicht 30, den Leiterbahnabschnitt 38". Der Leiterbahnabschnitt 28 umfasst somit einen Leiterbahnabschnitt 28', in welchem die Leiterbahn 27 eine größere Leiterbahnbreite aufweist und welcher die Leiterbahn 37 nicht überdeckt, den Leiterbahnabschnitt 28", in dem die Leiterbahn 27 eine größere Breite besitzt und in welchem die Leiterbahn 27 die Leiterbahn 28 vollständig überdeckt und einen Leiterbahnabschnitt 29, in dem die Leiterbahn 27 eine geringere Leiterbahndicke besitzt und in dem die Leiterbahn 27 die Leiterbahn 37 nicht überdeckt. Unter vollständiger Überdeckung eines zweiten Leiterbahnabschnitts durch einen ersten Leiterbahnabschnitt ist so zu verstehen, dass keine Bereiche des zweiten Leiterbahnabschnitts vorliegen, in denen der zweite nicht von dem ersten Leiterbahnabschnitt überdeckt wird, d.h. bei einer in die Richtung 63 orientierten Projektion des zweiten auf den ersten Leiterbahnabschnitt die Fläche des zweiten Leiterbahnabschnitts innerhalb der Fläche des ersten Leiterbahnabschnitts liegt. Die Leiterbahn 38 umfasst damit einen Leiterbahnabschnitt 38', in dem die Leiterbahn 37 nicht von der Leiterbahn 27 überdeckt wird, einen Leiterbahnabschnitt 38", in dem die Leiterbahn 37 von der Leiterbahn 27 überdeckt wird und einen Leiterbahnabschnitt 38"', in dem die Leiterbahn 37 nicht von der Leiterbahn 27 überdeckt wird. Entlang des Leiterbahnabschnittes 38" wird die Leiterbahn 37, nämlich der Leiterbahnabschnitt 38", in Bezug auf die senkrecht auf der von der Trägerschicht aufgespannten Ebene stehende Richtung 63 vollständig von der Leiterbahn 27, nämlich dem Leiterbahnabschnitt 28" überdeckt. Die elektrisch leitfähigen Schichten 20 und 30 sind demnach so strukturiert und zueinander ausgerichtet, dass eine derartige vollständige Überdeckung der Leiterbahn 37 durch die Leiterbahn 27 in dem Bereich der Leiterbahnabschnitte 28" und 38" erfolgt. Weiter ist die Leiterbahn 27 in dem Leiterbahnabschnitt 38" in Bezug auf die hier überdeckte Leiterbahn 27 derart ausgeformt, dass in zumindest einer, in der von der Trägerschicht aufgespannten Ebene liegenden Richtung, beispielsweise die Richtung 62, die Ausdehnung der Leiterbahn 37 zumindest 100 $\mu$m, bevorzugt zwischen 200 und 400 $\mu$m geringer als die Ausdehnung der Leiterbahn 27 ist.

Unter Ausdehnung einer Leiterbahn in eine Richtung wird hierbei die Distanz zwischen den Schnittpunkten verstanden, in denen die durch die Richtung definierte Gerade die beiden Außenkonturen, d.h. die innere bzw. die äußere Außenkontur, der Leiterbahn schneidet. Ist die Richtung senkrecht zur Längsrichtung der Leiterbahn orientiert, so entspricht diese Ausdehnung der Leiterbahnbreite. So entspricht beispielsweise in dem Bereich der Leiterbahn 27, in dem die Längsrichtung der Leiterbahn 27 in Richtung der Richtung 62 orientiert ist, der Ausdehnung der Leiterbahn 27 in der Richtung 61 der Breite der Leiterbahn. Umgekehrt entspricht in dem Bereich der Leiterbahn 27, in dem die Längsrichtung der Leiterbahn 27 in Richtung der Richtung 61 orientiert ist, die Ausdehnung der Leiterbahn 27 in Richtung der Richtung 62 der Breite der Leiterbahn 27 in diesem Bereich.

Vorzugsweise ist die Ausdehnung der Leiterbahn 38 entlang des Leiterbahnabschnitts 38 hierbei nicht nur in eine Richtung, d.h. in Richtung der Richtung 61 oder 62, sondern in beiden Richtungen 61 und 62 geringer als die Ausdehnung der Leiterbahn 27 in dieser Richtung bzw. Richtungen. Dies bedeutet, dass damit die Breite der Leiterbahn 37 entlang des Leiterbahnabschnitts 38" geringer als die Breite der Leiterbahn 27 entlang des Leiterbahnabschnitts 27" ist. Vorzugsweise unterscheidet sich hierbei der Unterschied in der Ausdehnung der Leiterbahnen 27 und 37 in der einen Richtung von dem Unterschied der Ausdehnung der ersten und zweiten Leiterbahnen in der zweiten Richtung. Auf diese Weise können unterschiedliche Registertoleranzen in die eine bzw. in die andere Richtung bei dem Aufbringen bzw. Strukturieren der elektrisch leitfähigen Schichten 20 und 30 berücksichtigt werden. In einer ersten Richtung, beispielsweise in die Richtung 62, in der die Registertoleranzen (dieser Prozesse) größer sind, wird auch ein größerer Unterschied in der Ausdehnung in der ersten und zweiten Leiterbahn vorgesehen, wohingegen in der anderen Richtung, beispielsweise der Richtung 61, in der die Registertoleranzen geringer sind, ein geringerer Unterschied in der Ausdehnung der erste und zweiten Leiterbahn vorgesehen wird. So wird in der einen Richtung zumindest ein Unterschied in den Ausdehnungen von 100 $\mu$m und in der anderen Richtung ein Unterschied in den Ausdehnungen von zumindest 50 $\mu$m vorgesehen und vorzugsweise der Unterschied in der Ausdehnung in der ersten Richtung um mehr als 50 $\mu$m größer als der Unterschied in den Ausdehnungen in der zweiten Richtung vorgesehen. Bildet z.B. die Richtung 62 die Richtung, in der die Trägerschicht beim Durchlaufen der für die Aufbringung der Grundschichten 21 und 31 verwendeten Druckwerke läuft, so wird der Unterschied in den Ausdehnungen in die Richtung 62 größer als der Unterschied in den Ausdehnungen in die Richtung 61 festgelegt. Damit wird die Leiterbahnbreite der Leiterbahn 27 in den Bereichen des Leiterbahnabschnitts 28, in denen die Längsrichtung der Leiterbahn 27 in die Richtung 61 orientiert ist, größer gewählt als in den Bereichen des Leiterbahnabschnitts 28, in denen die Längsrichtung der Leiterbahn 27 in die Richtung 62 orientiert sind. Der Unterschied in der Leiterbahnbreite beträgt hierbei vorzugsweise zwischen 50 und 200 $\mu$m.

Die Leiterbahnabschnitte 27" und 38", in denen die Leiterbahn-37 von der Leiterbahn 27 vollständig überdeckt wird, umfasst mindestens eine dreiviertel Windung der Leiterbahn 27 bzw. 28. Vorzugsweise umfassen die Leiterbahnabschnitte 38" und 28" zwischen 1 und 3 Windungen der Leiterbahn 37 bzw. 27. Durch die vollständige Überdeckung der Leiterbahn 37 durch die Leiterbahn 27 entlang des Leiterbahnabschnitts 28" bzw. 38" und die breitere Ausformung der Leiterbahn 27 in diesem Bereich wird eine registertolerante kapazitive Kopplung der beiden Leiterbahnabschnitte 28" und 38" erzielt sowie die Leitfähigkeit der Leiterbahn 27 in diesem Bereich erhöht, wodurch die oben genannten Vorteile erzielt werden. Im weiteren erfolgt durch das Vorsehen der Leiterbahn 26 eine kapazitive Kopplung der Leiterbahn 26 mit dem benachbarten Abschnitt der Leiterbahn 27.

In einem weiteren Schritt wird ein elektrischer Schaltkreis, vorzugsweise eine integrierte Schaltung in Form eines Silizium-Chips oder eines in organischer Elektronik gefertigten Schaltkreises, im Bereich der Elektrodenflächen 23 und 24 auf den in Fig. 2 dargestellten Folienkörper aufgebracht und mit den Elektrodenflächen 23 und 24 kontaktiert, beispielsweise mittels eines elektrisch leitfähigen Klebers. Durch die besondere Ausgestaltung der elektrisch leitfähigen Schichten 20 und 30 ist es hierbei möglich, die elektrische Schaltungen je nach Anforderungen auf die Oberseite oder Unterseite des Folienkörpers aufzubringen oder zwei elektrische Schaltungen vorzusehen, wobei die eine elektrische Schaltung auf der Oberseite und die zweite elektrische Schaltung auf der Unterseite des Folienkörpers angeordnet ist.

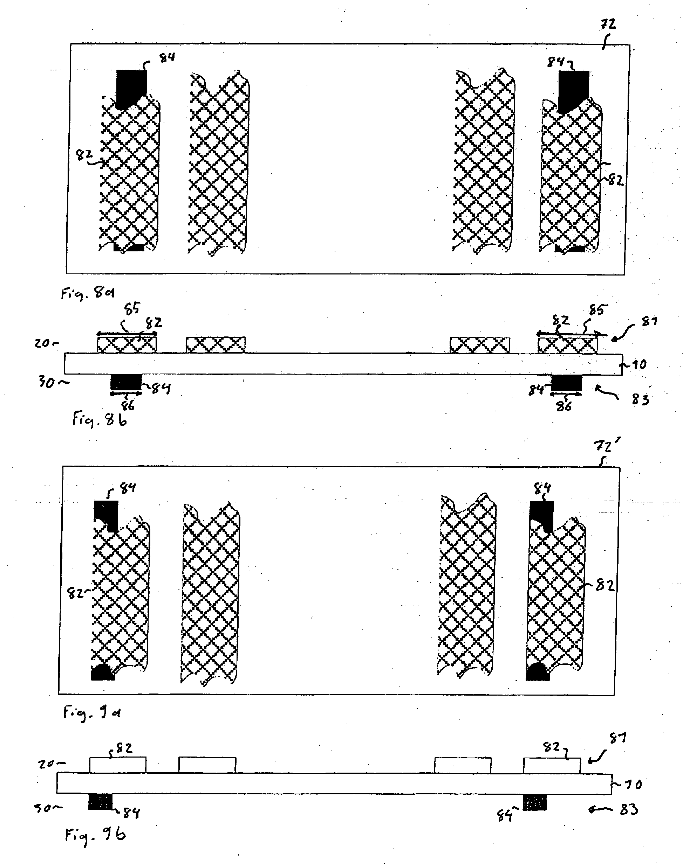

Der oben anhand der Ausführungsform nach Fig. 5 bis Fig. 7 bezüglich der Leiterbahnabschnitte 28" und 38" beschriebene Effekt einer registertoleranten kapazitiven Kopplung der beiden Leiterbahnabschnitte 28" und 38" wird im folgenden noch anhand der Figuren Fig. 8a bis Fig. 9b detailliert erläutert.

Fig. 8a zeigt einen Ausschnitt eines Bereiches 72, in dem in der elektrisch leitfähigen Schicht 20 eine spulenförmige Leiterbahn 81 und in der elektrisch leitfähigen Schicht 30 eine spulenförmige Leiterbahn 83 abgeformt ist. Die Leiterbahn 81 und die spulenförmige Leiterbahn 83 weist jeweils einen mindestens eine ¾ Windung der spulenförmigen Leiterbahn umfassenden Leiterbahnabschnitt 82 bzw. 84 auf, von dem in den Figuren Fig. 8a bis Fig. 9b jeweils ein Ausschnitt gezeigt ist. Wie in den Darstellungen Fig. 8a und Fig. 8b angedeutet, überdeckt der Leiterbahnabschnitt 82 den Leiterbahnabschnitt 84 hierbei vollständig, zumindest in einem ¾ Windung des Leiterbahnabschnitts 82 umfassenden Bereich und vorzugsweise auch im gesamten Bereich des Leiterbahnabschnitts 82. So zeigt Fig. 8a auch die vollständige Überdeckung des Leiterbahnabschnitts 84 durch den Leiterbahnabschnitt 82 in zwei gegenüberliegenden Teilabschnitten von Windungen der Leiterbahnen 81 und 85.

Die Ausdehnung 86 der Leiterbahn 83 in einer von der Trägerschicht 10 aufgespannten Ebene liegenden und in der Schnittebene des Querschnitts nach Fig. 8 liegenden Richtung ist hierbei um den Wert r geringer als die Ausdehnung 85 der Leiterbahn 81 in dieser Richtung, wie dies in Fig. 8b gezeigt ist. Eine Verschiebung der spulenförmigen Leiterbahnen 81 und 83 zueinander, wie sie bei der Strukturierung der elektrisch leitfähigen Schichten 20 und 30 aufgrund von Registerungenauigkeiten auftreten kann, führt damit nicht zur Veränderung des durch die kapazitive Kopplung der Leiterbahnabschnitte 82 und 84 bewirkten kapazitiven Anteils, solang der Wert r groß genug gewählt wird, insbesondere größer als die Registertoleranzen gewählt wird. Dies ist beispielhaft in Fig. 9a und Fig. 9b dargestellt, welche einen Ausschnitt aus einem Bereich 72' zeigen, bei dem aufgrund der Registerungenauigkeiten bei der Strukturierung der elektrisch leitfähigen Schichten 20 und 30 die spulenförmigen Leiterbahnen 81 und 83 gegenüber der Soll-Vorgabe (Fig. 8a, Fig. 8b) verschoben sind.

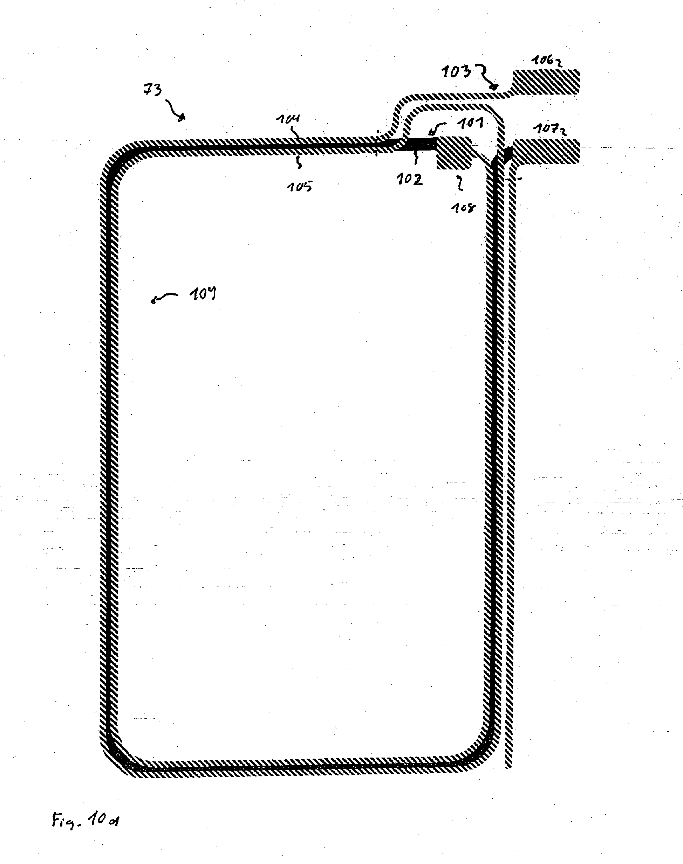

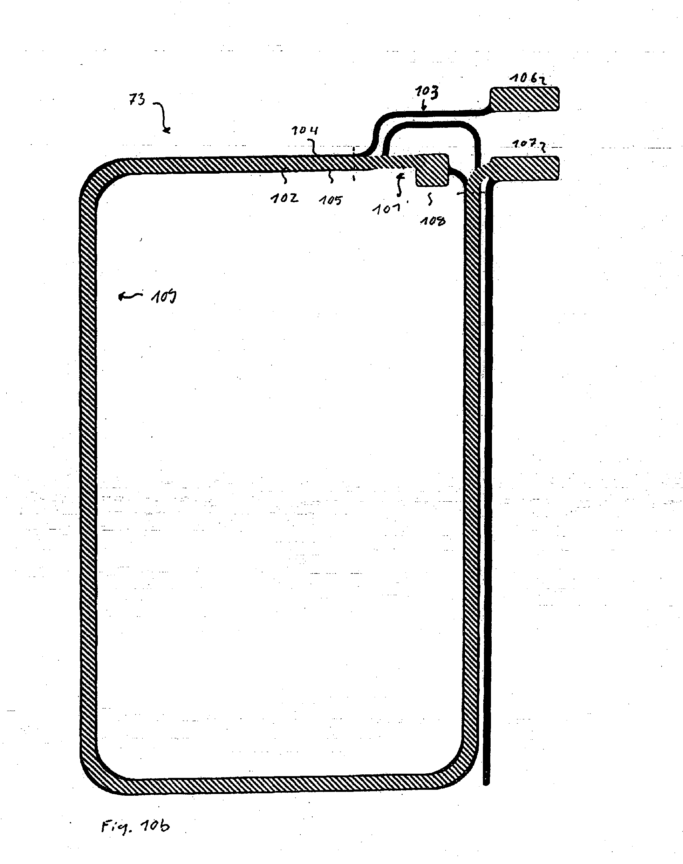

Eine weitere Ausführungsform des Folienelements nach Fig. 3 wird nun anhand der Figuren Fig. 10a bis Fig. 12b erläutert. Fig. 10a zeigt eine schematische Draufsicht auf die Oberseite eines Bereichs 73 eines Folienelements. Wie in Fig. 10a angedeutet, ist in der dem Betrachter zugewandten elektrisch leitfähigen Schicht eine spulenförmige Leiterbahn 103 vorgesehen, deren eines Ende mit einer Elektrodenfläche 106 und deren anderes Ende mit einer Durchkontaktierungsfläche 108 verbunden ist. In der darunter liegenden, durch die Trägerschicht 10 getrennten elektrisch leitfähigen Schicht ist eine spulenförmige Leiterbahn 101 abgeformt, deren eines Ende mit der Durchkontaktierungsfläche 108 und deren anderes Ende mit einer Elektrodenfläche 107 verbunden ist. Fig. 10b zeigt eine schematische Draufsicht auf den Bereich 73 des Folienelements von der Unterseite. Hier ist dem Betrachter die elektrisch leitfähige Schicht mit der spulenförmigen Leiterbahn 101 zugewandt und unterhalb der spulenförmigen Leiterbahn 101 ist - durch die Trägerschicht 10 getrennt - die spulenförmige Leiterbahn 103 vorgesehen. Wie in den Figuren Fig. 10a und 10b dargestellt, weist die spulenförmige Leiterbahn 103 zwei Windungen auf und die spulenförmige Leiterbahn 101 eine Windung auf. Es ist jedoch auch möglich, dass die Windungszahl der spulenförmigen Leiterbahnen 101 und 103 anders gewählt ist, vorzugsweise aus dem Bereich ¾ Windung bis 5 Windungen gewählt ist. Wie in den Figuren Fig. 10a und Fig. 10b weiter erkennbar ist, weist die spulenförmige Leiterbahn 101 einen Leiterbahnabschnitt 102 auf, welcher die Leiterbahn 103 teilweise überdeckt und die Leiterbahn 103 einen Leiterbahnabschnitt mit Teilabschnitten 104 und 105 auf, die von dem Leiterbahnabschnitt 102 teilweise überdeckt werden. Die beiden Teilabschnitte 104 und 105 sind hierbei unterschiedlichen Windungen der spulenförmigen Leiterbahn 103 zugeordnet. Gemäß der Anordnung nach Fig. 10a und Fig. 10b überdeckt somit der Leiterbahnabschnitt 102 in einem etwas mehr als eine % Windung des Leiterbahnabschnitts 102 umfassenden Bereich 109 (durch Strichpunktierung abgegrenzt) die zwei Teilabschnitte 104 und 105 des Leiterbahnabschnitts der Leiterbahn 103 jeweils zumindest teilweise, wobei die beiden Teilabschnitte 104 und 105 unterschiedlichen Windungen der spulenförmigen Leiterbahn 103 zugeordnet sind.

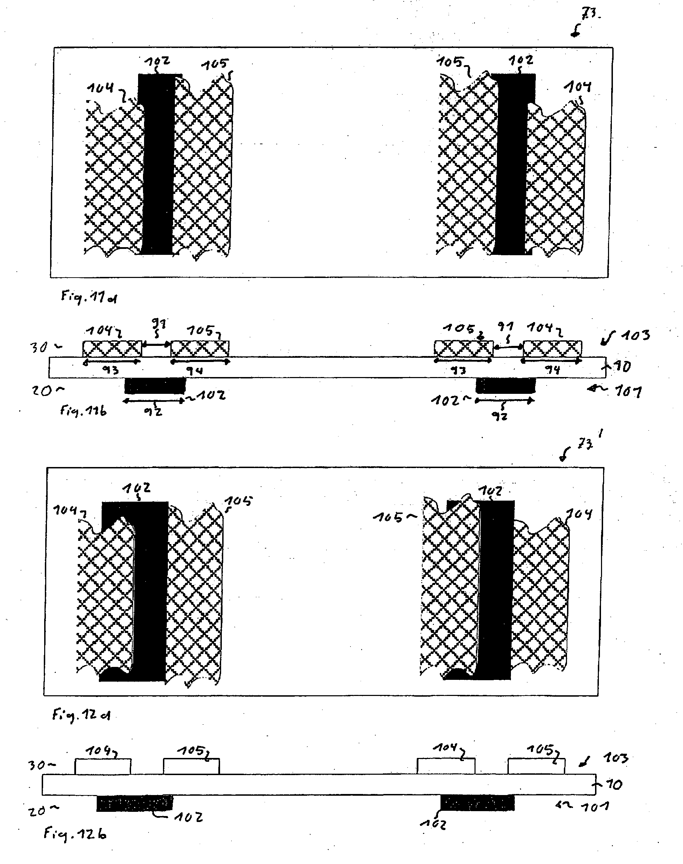

Dies ist auch schematisch in den Figuren Fig. 11a und Fig. 11b gezeigt, welche einen Ausschnitt aus einer Draufsicht und einer Schnittdarstellung des Bereichs 73 zeigen.

Zwei Teilabschnitte sind hierbei unterschiedlichen Windungen des zweiten Leiterbahnabschnitts zugeordnet, wenn für jede Schnittlinie quer zum ersten Leiterbahnabschnitt in diesem Bereich die jeweiligen Schnittpunkte der Teilabschnitte mit der Schnittlinie entlang des zweiten Leiterbahnabschnitts um mindestens ½ Windung voneinander entfernt angeordnet sind.

Wie in Fig. 11b gezeigt, weist der Leiterbahnabschnitt 102 eine Leiterbahnbreite 92 und die Teilabschnitte 104 und 105 eine Leiterbahnbreite 93 bzw. 94 auf. Weiter sind die beiden Teilabschnitte 104 und 105 voneinander durch einen Abstand 91 voneinander beabstandet. Der Abstand 91 wird durch die Beabstandung der zueinander liegenden Flanken der Teilabschnitte 104 und 105 bestimmt, wie dies in Fig. 11b dargestellt ist.

In dem Bereich 109 ist der Abstand 91 zwischen den beiden Teilabschnitten 104 und 105 des Leiterbahnabschnitts 103 um mindestens den Wert r geringer als die Breite 92 des ersten Leiterbahnabschnitts gewählt. Weiter ist die Summe der Breiten 93 und 94 der beiden Teilabschnitte 104 bzw. 105 des Leiterbahnabschnitts 103 und des Abstands 91 zwischen den beiden Teilabschnitten 104 und 105 um mindestens den Wert r größer als die Breite 92 des ersten Leiterbahnabschnitts 101.

Die Breiten der Leiterbahnen sowie deren Beabstandung wird basierend auf den selben Schnittgeraden bestimmt, die vorzugsweise senkrecht auf den Innenkonturen der Leiterbahnabschnitte bzw. Teilabschnitte steht oder parallel zur ersten Richtung orientiert ist.

Diese Bedingung ist vorzugsweise entlang des gesamten Leiterbahnabschnitts 102 einzuhalten. Falls die Leiterbahnbreiten 93, 94 und 92 sowie der Abstand 91 somit entlang des Bereichs 109 variiert, sind somit jeweils diese Werte lokal so zu wählen, dass die obigen Bedingung zutrifft.

Durch diese Ausgestaltung der spulenförmigen Leiterbahnen 101 und 103 sowie diese Anordnung zueinander wird zum Einen eine - wie oben bereits erläutert-vorteilhafte serielle kapazitive Kopplung von Teilabschnitten der Leiterbahn 103 über den Leiterbahnabschnitt 102 bewirkt und im weiteren bewirkt, dass Registerungenauigkeiten bei der Strukturierung der elektrisch leitfähigen Schichten 20 und 30 die Resonanzfrequenz der Antenne nicht oder lediglich unwesentlich beeinflussen. Dies ist in Fig. 12a und Fig. 12b dargestellt, welche eine durch Registerungenauigkeiten verursachte relative Verschiebung der spulenförmigen Strukturen 101 und 103 zueinander im Vergleich zum Soll-Zustand (Fig. 11a, Fig. 11 b) zeigt. Bei einer relativen Verschiebung in Richtung der Schnittlinie der Schnittdarstellung nach Fig. 11b und Fig. 12b erhöht sich die Kapazität des einen kapazitiven Elements und verringert sich die Kapazität des anderen kapazitiven Elements, sodass sich in der Summe im Wesentlichen keine Änderung der Gesamtkapazität ergibt.

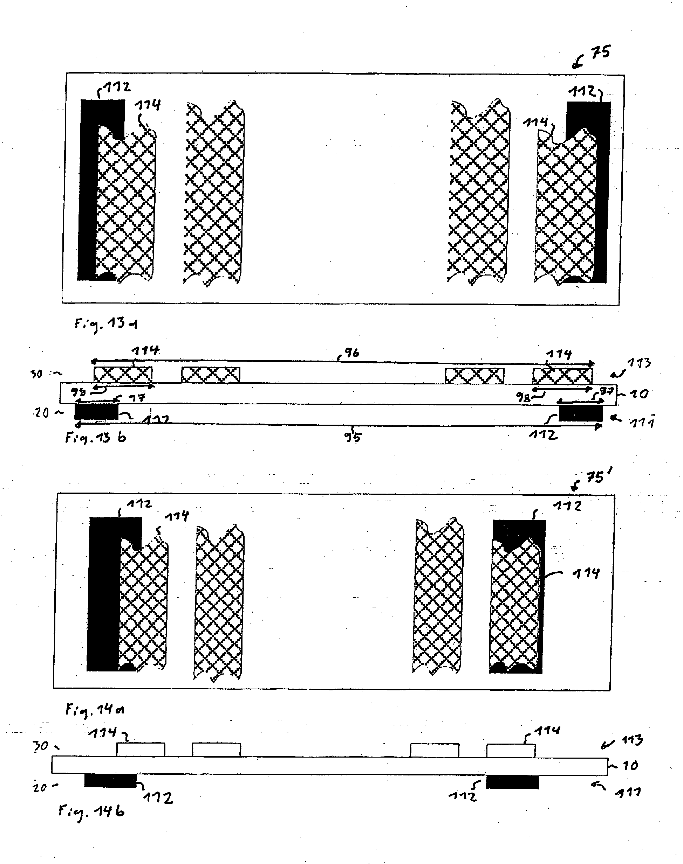

Ein weiteres Ausführungsbeispiel des Folienelements nach Fig. 3 wird nun anhand der Figuren Fig. 13a bis Fig. 14b erläutert. Fig. 13a und Fig. 13b zeigen einen Ausschnitt aus einem Bereich 75 eines Folienelements, in dem in der elektrisch leitfähigen Schicht 30 eine spulenförmige Leiterbahn 113 und in der elektrisch leitfähigen Schicht 20 eine spulenförmige Leiterbahn 111 ausgeformt sind. Die spulenförmige Leiterbahn 111 weist einen mindestens eine % Windung der spulenförmigen Leiterbahn 111 umfassenden Leiterbahnabschnitt 112 auf und die Leiterbahn 113 einen zumindest einen % Windung umfassenden Leiterbahnabschnitt 114 auf. Vorzugsweise umfassen die Leiterbahnabschnitte 112 und 114 ¾ bis 3 Windungen der spulenförmigen Leiterbahn 111 bzw. 113.

Der Leiterbahnabschnitt 114 weist eine Leiterbahnbreite 98 und der Leiterbahnabschnitt 111 eine Leiterbahnbreite 97 auf, wie dies in Fig. 13b dargestellt ist. Entlang des Leiterbahnabschnitts 111 überdeckt der Leiterbahnabschnitt 111 in zumindest einem t Windungen des Leiterbahnabschnitts 112 umfassenden Bereich den Leiterbahnabschnitt 114 zumindest teilweise - oder überdeckt den Leiterbahnabschnitt 114 entlang des gesamten Leiterbahnabschnitts 112 teilweise, wie dies in Fig. 13a und Fig. 13b dargestellt ist. Entlang des ersten Leiterbahnabschnitts unterscheiden sich in diesen Bereichen die Außendurchmesser der sich jeweils teilweise überdeckenden Windungen der spulenförmigen Leiterbahnen 111 und 113. Für jeden Punkt des Bereichs wird somit - wie in Fig. 13b gezeigt - der Außendurchmesser 95 der teilweise überdeckten Windung der spulenförmigen Leiterbahn 111 sowie der Außendurchmesser 96 der teilweise überdeckten Windung der spulenförmigen Leiterbahn 113 ermittelt. Der Außendurchmesser wird hierbei entlang einer Schnittlinie bestimmt, welche parallel zu einer in der von der Trägerschicht aufgespannten Ebene liegenden Richtung bestimmt ist oder durch den gemeinsamen Flächenschwerpunkt des ersten und zweiten Leiterbahnabschnitts gelegt ist. Weiter kann es auch vorgesehen sein, dass - insbesondere bei rechteckförmiger oder quadratischer Formgebung des ersten und zweiten Leiterbahnabschnitts in einem eine % Windung umfassenden ersten Bereich (1. und 3. Quadrant) eine erste Richtung und in einem eine ¼ Windung umfassenden zweiten Bereich (2. und 4. Quadrant) eine vorzugsweise hierauf senkrecht stehende zweite Richtung für die Ausrichtung der Schnittlinie verwendet wird. Vorzugsweise wird jedoch eine Schnittlinie verwendet, welche senkrecht auf den jeweils betrachteten Teilabschnitten des ersten und/oder zweiten Leiterbahnabschnitts, d.h. der Leiterbahnabschnitts 112 bzw. 114 steht.

Wie bereits oben dargelegt, werden die spulenförmigen Leiterbahnen 111 und 113 hierbei so ausgestaltet, dass sich die Außendurchmesser 95 und 96 um den Wert r unterscheiden und die Leiterbahnen 97 und 98 jeweils größer als das zweifache des Wertes r ist.

Dadurch ergibt sich der auch im Weiteren anhand von Fig. 14a und Fig. 14b gezeigte Effekt, dass sich bei Verschiebung der spulenförmigen Leiterbahnen 111 und 113 relativ zueinander die Gesamtkapazität der Antenne nicht oder nur unwesentlich ändert, da sich zwar auf der einen Seite, beispielsweise bei der in Fig. 14b verdeutlichten Verschiebung die Kapazität verringert (linke Seite), jedoch auf der anderen Seite des Folienelements sich die Kapazität entsprechend erhöht (linke Seite) und somit die Gesamtkapazität konstant bleibt.

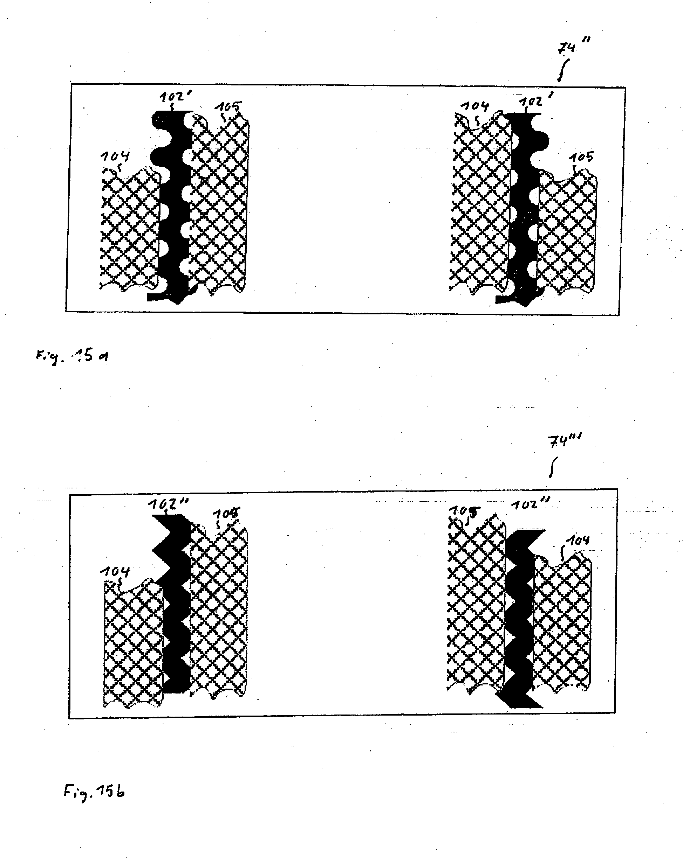

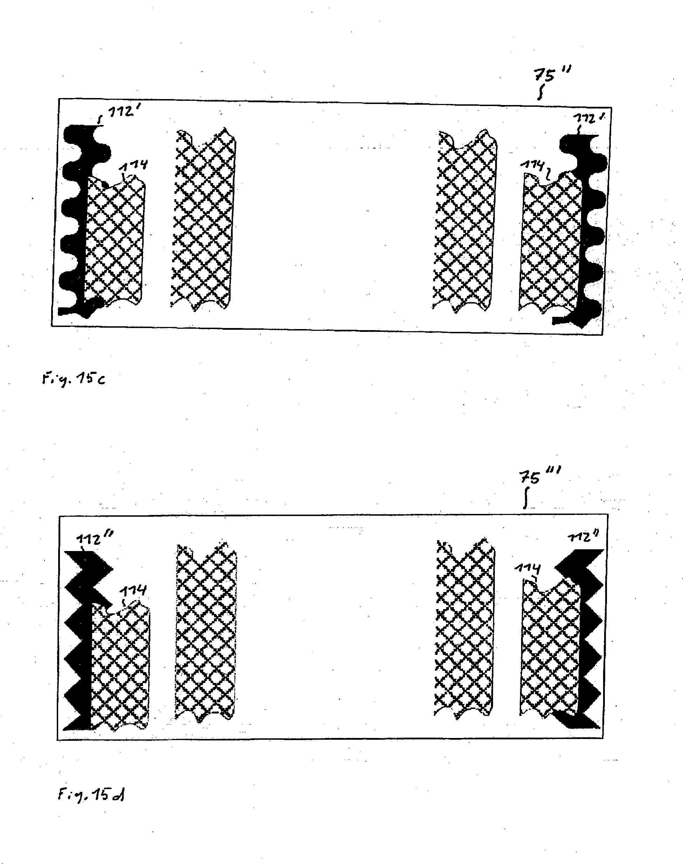

In den Figuren Fig. 15a bis Fig. 15d sind nun Variationen der Ausführungsbeispiele nach den Figuren Fig. 11 a bis Fig. 14b gezeigt, in denen Leiterbahnabschnitte, nämlich die Leiterbahnabschnitte 102 bzw. 112 substrukturiert sind und als substrukturierte Leiterbahnabschnitte 102', 102", 112' und 112" ausgeformt sind. Die Substrukturierung der Leiterbahnabschnitte ist hierbei vorzugsweise so gewählt, dass die Leiterbahnen zumindest in Teilbereichen des Leiterbahnabschnitts wellenförmig und/oder zickzackförmig ausgeformt sind. Dadurch lässt sich die effektive Länge der Leiterbahnen 101 und 111 gezielt verlängern, wodurch sich der Widerstand der Leiterbahnen erhöht. Mit einem erhöhten Widerstand kann die Bandbreite der Antenne erhöht werden. In Verbindung mit der vollständigen oder teilweisen Überlappung mit den Leiterbahnen 103 bzw. 113 - wie in den Ausführungsbeispielen nach den Figuren Fig. 10a bis Fig. 14b dargelegt - kann durch die Substrukturierung, insbesondere mit einer wellenförmigen und/oder zickzackförmigen Gestaltung der Leiterbahnen, auch die durch die Überlappung entstehende Kapazität verringert werden, wodurch die Resonanzfrequenz der Antenne erhöht werden kann. Durch die Substrukturierung der Leiterbahnabschnitte kann somit die Antennenstruktur noch genau auf die Erfordernisse hinsichtlich Bandbreite, Resonanzfrequenz durch gezielte Beeinflussung der Parameter elektrischer Widerstand, Induktivität und Kapazität eingestellt werden.

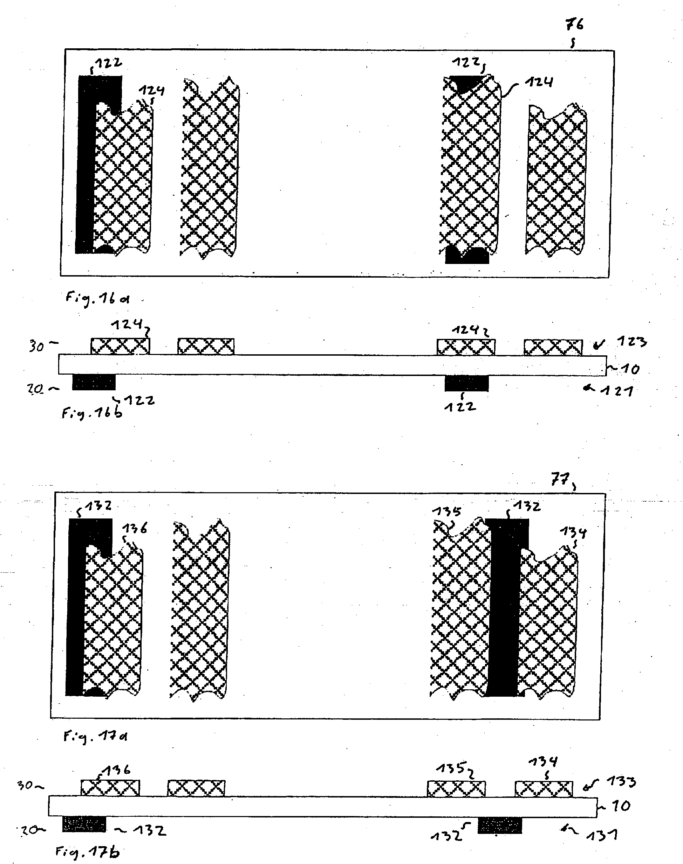

Im Weiteren ist es auch möglich, die Ausführungsformen nach den Figuren Fig. 5 bis Fig. 15d miteinander zu kombinieren. So verdeutlichen beispielsweise die Figuren Fig. 16a und Fig. 16b eine Ausführungsform, bei der in die elektrisch leitfähige Schicht 30 eine spulenförmige Leiterbahn 123 mit einem Leiterbahnabschnitt 124 und in die elektrisch leitfähige Schicht 20 eine spulenförmige Leiterbahn 121 mit einem Leiterbahnabschnitt 122 abgeformt ist. Fig. 17a und Fig. 17b verdeutlichen eine Ausführungsform, bei der in die elektrisch leitfähige Schicht 30 eine spulenförmige Leiterbahn 133 mit einem Leiterbahnabschnitt 136 und einem Leiterbahnabschnitt mit zwei Teilabschnitten 135 und 134 abgeformt ist und in die elektrisch leitfähige Schicht 20 eine spulenförmige Leiterbahn mit einem Leiterbahnabschnitt 132 abgeformt ist.

Eine weitere Ausführungsform der Erfindung ist in Fig. 4 verdeutlicht. Fig. 4 zeigt ein Folienelement 2 mit der Trägerschicht 10, den Dekorschichten 41 und 42, den elektrisch leitfähigen Schichten 20 und 30 und den Schutzschichten 51 und 52. In Bezug auf die Ausgestaltung der Schichten 10, 20, 30, 41, 42, 51 und 52 wird auf die obigen Ausführungen, insbesondere auf die Ausführungen zu den Figuren Fig. 1 bis Fig. 3 und Fig. 5 bis Fig. 7 verwiesen. Bei dem Ausführungsbeispiel nach Fig. 4 werden die elektrisch leitfähigen Schichten 20 und 30 somit auf eine mehrschichtige Trägerschicht 10' aufgebracht, welche von der Trägerschicht 10 und den beidseitig auf der Trägerschicht 10 aufgebrachten Dekorschichten 41 und 42 ausgebildet sind. Eine besonders bevorzugte Ausführungsform der Trägerschicht 10 besteht hierbei darin, dass in die Trägerschicht 10 beidseitig ein optisch aktives Oberflächenrelief repliziert wird und durch die anschließende Aufbringung der (metallischen) elektrisch leitfähigen Schichten 20 und 30 in den Bereichen, in denen die metallischen Schichten 20 und 30 vorgesehen sind, von den elektrisch leitfähigen Schichten 20 und 30 eine Reflexionsschicht bereitgestellt wird, welche den durch die optisch aktive Oberflächenstruktur generierten optisch variablen Effekt sichtbar macht. Hierdurch kann auf einfache Weise ein schwer nachahmbares Sicherheitsmerkmal in dem Folienelement 2 integriert werden. Da jede Änderung der metallischen Schichten 20 und 30 die elektrischen Eigenschaften der Antennenstruktur einerseits und die optischen Eigenschaften des Folienelements andererseits beeinflusst, greifen optisches Sicherheitselement und berührungslos auslesbares Sicherheitselement ineinander und schützen sich gegenseitig.

**Patentansprüche**

**1.** Mehrschichtiges Folienelement (1, 2) mit einer flexiblen dielektrischen Trägerschicht (10) mit einer Schichtdicke von weniger als 800 $\mu$m, mit einer ersten elektrisch leitfähigen Schicht (20), in der in einem ersten Bereich (71 bis 77) des Folienelements eine erste spulenförmige Leiterbahn (27, 81, 101, 111, 121, 131) ausgeformt ist, mit einer zweiten elektrisch leitfähigen Schicht (30), in der in dem ersten Bereich (71 bis 77) eine zweite spulenförmige Leiterbahn (37, 83, 103, 113, 123, 133) ausgeformt ist, wobei die dielektrische Trägerschicht (10) zwischen der ersten und zweiten elektrisch leitfähigen Schicht angeordnet ist und die erste und zweite Leiterbahn (27, 37) sich zumindest bereichsweise überdecken und miteinander zu einer Antennenstruktur gekoppelt sind, und wobei ein mindestens eine dreiviertel Windung der ersten spulenförmigen Leiterbahn umfassender erster Leiterbahnabschnitt einen mindestens eine dreiviertel Windung der zweiten spulenförmigen Leiterbahn umfassenden zweiten Leiterbahnabschnitt in Bezug auf eine senkrecht auf der von der Trägerschicht aufgespannten Ebene stehenden Richtung (63) zumindest bereichsweise überdeckt, **dadurch gekennzeichnet, dass** in einem t Windungen des ersten Leiterbahnabschnitts (102) umfassenden Bereich der erste Leiterbahnabschnitt (102) zumindest zwei Teilabschnitte (104, 105) des zweiten Leiterbahnabschnitts jeweils zumindest teilweise überdeckt, wobei die beiden Teilabschnitte (104, 105) unterschiedlichen Windungen der zweiten spulenförmigen Leiterbahn (103) zugeordnet sind und $t \geq \frac{1}{4}$ ist.

**2.** Mehrschichtiges Folienelement nach Anspruch 1,
**dadurch gekennzeichnet,**
**dass** der erste Leiterbahnabschnitt den zweiten Leiterbahnabschnitt in Bezug auf eine senkrecht auf der von der Trägerschicht aufgespannten Ebene stehenden Richtung (63) zumindest bereichsweise derart überdeckt, dass die Flächenabmessung der Überdeckungsfläche des ersten und zweiten Leiterbahnabschnitts bei Verschiebung der ersten spulenförmigen Leiterbahn (27, 28, 81, 83, 101, 102, 111, 113, 121, 123, 131, 133) in einer, in der von der Trägerschicht (10) aufgespannten Ebene liegenden ersten Richtung (61), um 100 $\mu$m konstant bleibt.

**3.** Mehrschichtiges Folienelement nach einem der vorhergehenden Ansprüche,
**dadurch gekennzeichnet,**
**dass** in diesem Bereich der Abstand (91) zwischen den beiden Teilabschnitten (104, 105) des zweiten Leiterbahnabschnitts (103) um mindestens den Wert r geringer als die Breite (92) des ersten Leiterbahnabschnitts (102) ist und in diesem Bereich die Summe der Breiten (93, 94) der beiden Teilabschnitte (104, 105) und des Abstands (91) zwischen den Teilabschnitten (104, 105) um mindestens den Wert r größer als die Breite (92) des ersten Leiterbahnabschnitts (101) ist, wobei $r \geq 100$ $\mu$m und insbesondere die Breite jedes der Teilabschnitte $\geq r$ ist.

**4.** Mehrschichtiges Folienelement nach einem der vorhergehenden Ansprüche,
**dadurch gekennzeichnet,**
**dass** in einem t Windungen des ersten Leiterbahnabschnitts umfassenden Bereich der erste Leiterbahnabschnitt (28, 82) den zweiten Leiterbahnabschnitt (38", 84) vollständig überdeckt und in diesem Bereich entlang des ersten Leiterbahnabschnitts in mindestens einer, in der von der Trägerschicht aufgespannten Ebene liegenden ersten Richtung (65), die Ausdehnung der zweiten Leiterbahn (37, 83) um den Wert r geringer als die Ausdehnung der ersten Leiterbahn (27, 81) ist, wobei $t \geq \%$ und $r \geq 100$ $\mu$m ist.

**5.** Mehrschichtkörper nach einem der vorhergehenden Ansprüche,
**dadurch gekennzeichnet,**
**dass** der erste Leiterbahnabschnitt (28") den zweiten Leiterbahnabschnitt (38") in Bezug auf die senkrecht auf der von der Trägerschicht aufgespannten Ebene stehenden Richtung (63) vollständig überdeckt und entlang des ersten Leiterbahnabschnitts (38") in der ersten Richtung (61) die Ausdehnung der zweiten Leiterbahn (37) um zumindest 100 $\geq$m geringer als die Ausdehnung der ersten Leiterbahn (27) ist.

**6.** Mehrschichtiges Folienelement nach Anspruch 4 oder 5,
**dadurch gekennzeichnet,**
**dass** entlang des ersten Leiterbahnabschnitts (28") in einer, in der von der Trägerschicht aufgespannten Ebene liegenden zweiten Richtung (62) die Ausdehnung der zweiten Leiterbahn (37) zumindest 50 $\mu$m geringer als die Ausdehnung der ersten Leiterbahn (27) ist, wobei die erste und die zweite Richtung (61, 62) einen rechten Winkel einschließen.

**7.** Mehrschichtiges Folienelement nach Anspruch 4 oder 5,
**dadurch gekennzeichnet,**
**dass** entlang des ersten Leiterbahnabschnitts (28") in der zweiten Richtung (62) die Ausdehnung der zweiten Leiterbahn (37) zwischen 200 und 400 $\mu$m geringer als die Ausdehnung der ersten Leiterbahn (27) ist.

**8.** Mehrschichtiges Folienelement nach Anspruch 4 oder 5,
**dadurch gekennzeichnet,**

**dass** entlang des ersten Leiterbahnabschnitts (28") der Unterschied in der Ausdehnung der ersten und zweiten Leiterbahn in der ersten Richtung (61) größer, insbesondere um mehr als 20 % größer als der Unterschied in der Ausdehnung der ersten und zweiten Leiterbahn in der zweiten Richtung (62) ist.

9. Mehrschichtiges Folienelement nach einem der vorgehenden Ansprüche,
**dadurch gekennzeichnet,**
**dass** in einem t Windungen des ersten Leiterbahnabschnitts (111) umfassenden Bereich entlang des ersten Leiterbahnabschnitts (111) sich die ersten und zweiten Leiterbahnabschnitte (111, 114) teilweise überdecken, sich die Außendurchmesser (95, 96) der jeweiligen Windung der ersten spulenförmigen Leiterbahn (111) und der zweiten spulenförmigen Leiterbahn (113) in mindestens einer, in der von der Trägerschicht aufgespannten Ebene liegenden ersten Richtung (61) um den Wert r unterscheiden und die Breiten der ersten spulenförmigen Leiterbahn (111) und der zweiten spulenförmigen Leiterbahn (113) jeweils größer als das zweifache des Wertes r ist, wobei $t \geq \frac{1}{4}$ und $r \geq 100\ \mu m$ ist.

10. Mehrschichtiges Folienelement nach Anspruch 9,
**dadurch gekennzeichnet,**
**dass** die Breite (97) der spulenförmigen Leiterbahn mit dem größeren Außendurchmesser der jeweiligen Windung kleiner oder gleich der Breite (98) der spulenförmigen Leiterbahn (113) mit dem kleineren Außendurchmesser der jeweiligen Windung ist.

11. Mehrschichtiges Folienelement nach einem der vorgehenden Ansprüche,
**dadurch gekennzeichnet,**
**dass** die erste und/oder zweite spulenförmige Leiterbahn im ersten Leiterbahnabschnitt (102', 102", 112', 112") und/oder im zweiten Leiterbahnabschnitt substrukturiert ist, insbesondere zickzackförmig oder wellenlinienförmig substrukturiert ist.

12. Mehrschichtiges Folienelement nach Anspruch 11,
**dadurch gekennzeichnet,**
**dass** die erste und/oder zweite Leiterbahn im ersten Leiterbahnabschnitt und/oder im zweiten Leiterbahnabschnitt gemäß einer periodischen Substrukturierungsfunktion substrukturiert ist, wobei die Periode der Substrukturierungsfunktion kleiner als 10 mm, insbesondere kleiner als 5 mm ist.

13. Mehrschichtiges Folienelement nach einem der vorgehenden Ansprüche,
**dadurch gekennzeichnet,**
**dass** die erste Leiterbahn (27) einen dritten Leiterbahnabschnitt (29) aufweist, der an den ersten Leiterbahnabschnitt (28") angrenzt und die Leiterbahnbreite des dritten Leiterbahnabschnitts (29) geringer als die Leiterbahnbreite des ersten Leiterbahnabschnitts (28") ist, dass die Leiterbahnbreite des dritten Leiterbahnabschnitts (29) um mindestens $100\ \mu m$ geringer als die Leiterbahnbreite des ersten Leiterbahnabschnitts (28") ist und/oder die Leiterbahnbreite des dritten Leiterbahnabschnitts (29) zwischen 10 und 50 % der Leiterbahnbreite des ersten Leiterbahnabschnitts (28") beträgt.

14. Mehrschichtiges Folienelement nach einem der vorhergehenden Ansprüche,
**dadurch gekennzeichnet,**
**dass** zwischen der ersten und zweiten Leiterbahn (27, 37) und/oder auf der von der Trägerschicht (10) abgewandten Seite der erste und/oder zweiten Leiterbahn (27, 37) eine Dekorschicht (41, 42) angeordnet ist, wobei die Dekorschicht in Verbindung mit der ersten und/oder zweiten elektrisch leitfähigen Schicht (20, 30) ein optisch variables Sicherheitselement bereitstellt und/oder dass eine Reliefstruktur zumindest bereichsweise in die erste und/oder zweite Leiterbahn abgeformt ist, insbesondere eine einen optisch variablen Effekt generierende Reliefstruktur in die erste und/oder zweite Leiterbahn abgeformt ist.

15. Verfahren zur Herstellung eines mehrschichtigen Folienelements (1, 2) umfassend die Schritte:

Bereitstellen einer flexiblen dielektrischen Trägerschicht (10) mit einer Schichtdicke von weniger als $800\ \mu m$,
Aufbringen einer ersten elektrisch leitfähigen Schicht, in der in einem ersten Bereich (71) des Folienelements eine erste spulenförmige Leiterbahn (27) mit einem mindestens eine dreiviertel Windung der spulenförmigen ersten Leiterbahn (27) umfassenden ersten Leiterbahnabschnitt (28") ausgeformt ist, auf eine erste Oberfläche der Trägerschicht (10),
Aufbringen einer zweiten elektrisch leitfähigen Schicht (30), in der in dem ersten Bereich (71) eine zweite spulenförmige Leiterbahn (37) mit einem mindestens eine dreiviertel Windung der zweiten spulenförmigen Leiterbahn (37) umfassenden zweiten Leiterbahnabschnitt (38") ausgeformt ist, auf eine der ersten Oberfläche gegenüberliegende zweite Oberfläche der Trägerschicht (10), derart, dass die erste und zweite Leiterbahn (27, 37) sich zumindest bereichsweise überdecken und miteinander zu einer Antennenstruktur gekoppelt werden, **dadurch gekennzeichnet, dass** in einem t Windungen des ersten Leiterbahnabschnitts (102) umfassenden Bereich der erste Leiterbahnabschnitt (102) zumindest zwei Teilabschnitte (104, 105) des zweiten Leiterbahnabschnitts jeweils zumindest teilweise überdeckt, wobei die beiden Teilabschnitte (104, 105) unterschiedlichen Windungen der zweiten spulenförmigen Leiterbahn (103) zugeordnet sind und t ≥ ¼ ist, und wobei insbesondere die zweite elektrisch leitfähige Schicht (30) auf die der ersten Oberfläche gegenüberliegenden zweiten Oberfläche der Trägerschicht (10) derart aufgebracht wird, dass die Flächenabmessung der Überdeckungsfläche des ersten und zweiten Leiterbahnabschnitts bei Verschiebung der ersten spulenförmigen Leiterbahn gegenüber der zweiten spulenförmigen Leiterbahn in einer, in der von der Trägerschicht aufgespannten Ebene liegenden ersten Richtung (61) um 100 μm konstant bleibt.

## Claims

1. Multilayer film element (1, 2) having a flexible dielectric carrier layer (10) having a layer thickness of less than 800 μm, having a first electrically conductive layer (20) in which a first coiled conductor path (27, 81, 101, 111, 121, 131) is formed in a first region (71 to 77) of the film element, having a second electrically conductive layer (30) in which a second coiled conductor path (37, 83, 103, 113, 123, 133) is formed in the first region (71 to 77), wherein the dielectric carrier layer (10) is arranged between the first and second electrically conductive layers and the first and second conductor paths (27, 37) overlap at least in regions and are coupled to each other to form an antenna structure, and wherein a first conductor path section which comprises at least one three-quarter winding of the first coiled conductor path overlaps, at least in regions, a second conductor path section which comprises at least one three-quarter winding of the second coiled conductor path with regard to a direction (63) which is perpendicular to the plane spanned by the carrier layer,
**characterised in that**,
at least two partial sections (104, 105) of the second conductor path section each at least partially overlap in a region of the first conductor path section (102) which comprises t windings of the first conductor path section (102), wherein the two partial sections (104, 105) are allocated to different windings of the second coiled conductor path (103) and t ≥ ¼.

2. Multilayer film element according to claim 1,
**characterised in that**,
the first conductor path section overlaps the second conductor path section at least in regions with regard to a direction (63) which is perpendicular to the plane spanned by the carrier layer in such a way that the surface dimensions of the overlap surface of the first and second conductor path sections remain constant during displacement of the first coiled conductor path (27, 28, 81, 83, 101, 102, 111, 113,121, 123, 131, 133) by 100 μm in a first direction (61) which lies in the plane spanned by the carrier layer (10).

3. Multilayer film element according to one of the preceding claims,
**characterised in that**,
in this region, the spacing (91) between the two partial sections (104, 105) of the second conductor path section (103) is smaller than the width (92) of the first conductor path section (102) by at least the value r and, in this region, the sum of the widths (93, 94) of the two partial sections (104, 105) and of the spacing (91) between the partial sections (104, 105) is larger than the width (92) of the first conductor path section (101) by at least the value r, wherein r ≥ 100 μm and in particular the width of each of the partial sections ≥ r.

4. Multilayer film element according to one of the preceding claims,
**characterised in that**,
the first conductor path section (28, 82) completely overlaps the second conductor path section (38", 84) in a region which comprises t windings of the first conductor path section and the extent of the second conductor path (37, 83) is smaller than the extent of the first conductor path (27, 81) by a value r in this region along the first conductor path section in at least one first direction (65) which lies in the plane spanned by the carrier layer, wherein t ≥ ¼ and r ≥ 100 μm.

5. Multilayer body according to one of the preceding claims,

**characterised in that**,

the first conductor path section (28") completely overlaps the second conductor path section (38") with regard to the direction (63) which is perpendicular to the plane spanned by the carrier layer and the extent of the second conductor path (37) is smaller than the extent of the first conductor path (27) by at least 100 $\mu$m, along the first conductor path section (38") in the first direction (61).

6. Multilayer film element according to claim 4 or 5,
   **characterised in that**,
   the extent of the second conductor path (37) is at least 50 $\mu$m smaller than the extent of the first conductor path (27) along the first conductor path section (28") in a second direction (62) which lies in the plane spanned by the carrier layer, wherein the first and the second direction (61, 62) enclose a right angle.

7. Multilayer film element according to claim 4 or 5,
   **characterised in that**,
   the extent of the second conductor path (37) is between 200 and 400 $\mu$m smaller than the extent of the first conductor path (27) along the first conductor path section (28") in the second direction (62).

8. Multilayer film element according to claim 4 or 5,
   **characterised in that**,
   the difference in the extent of the first and second conductor paths in the first direction (61) is larger, in particular is larger by more than 20 %, than the difference in the extent of the first and second conductor paths in the second direction (62), along the first conductor path section (28").

9. Multilayer film element according to one of the preceding claims,
   **characterised in that**,
   the first and second conductor path sections (111, 114) partially overlap in a region which comprises t windings of the first conductor path section (111) along the first conductor path section (111), the outer diameters (95, 96) of the respective winding of the first coiled conductor path (111) and of the second coiled conductor path (113) differ by the value r in at least one first direction (61) which lies in the plane spanned by the carrier layer, and the widths of the first coiled conductor path (111) and of the second coiled conductor path (113) are each larger than two times the value r, wherein t $\geq$ ¼ and r $\geq$ 100 $\mu$m.

10. Multilayer film element according to claim 9,
    **characterised in that**,
    the width (97) of the coiled conductor path having the larger outer diameter of the respective winding is smaller than or equal to the width (98) of the coiled conductor path (113) having the smaller outer diameter of the respective winding.

11. Multilayer film element according to one of the preceding claims,
    **characterised in that**,
    the first and/or second coiled conductor path is sub-structured in the first conductor path section (102', 102", 112', 112") and/or in the second conductor path section, in particular is sub-structured to be zigzagged or waved.

12. Multilayer film element according to claim 11,
    **characterised in that**,
    the first and/or second conductor path is sub-structured in the first conductor path section and/or in the second conductor path section according to a periodic sub-structuring function, wherein the period of the sub-structuring function is smaller than 10 mm, in particular smaller than 5 mm.

13. Multilayer film element according to one of the preceding claims,
    **characterised in that**,
    the first conductor path (27) has a third conductor path section (29) which abuts on the first conductor path section (28") and the conductor path width of the third conductor path section (29) is smaller than the conductor path width of the first conductor path section (28"), that the conductor path width of the third conductor path section (29) is smaller than the conductor path width of the first conductor path section (28'') by at least 100 $\mu$m and/or the conductor path width of the third conductor path section (29) amounts to between 10 and 50 % of the conductor path width of the first conductor path section (28").

14. Multilayer film element according to one of the preceding claims,

**characterised in that**,
a decorative layer (41, 42) is arranged between the first and second conductor paths (27, 37) and/or on the side of the first and/or second conductor path (27, 37) which is facing away from the carrier layer (10), wherein the decorative layer provides an optically variable security element in connection with the first and/or second electrically conductive layer (20, 30) and/or that a relief structure is moulded at least in regions into the first and/or second conductor path, in particular a relief structure which generates an optically variable effect is moulded into the first and/or second conductor path.

**15.** Method for the production of a multilayer film element (1,2) comprising the steps:

provision of a flexible dielectric carrier layer (10) having a layer thickness of less than 800 $\mu$m, application of a first electrically conductive layer in which a first coiled conductor path (27) having a first conductor path section (28") which comprises at least one three-quarter winding of the coiled first conductor path (27) is formed in a first region (71) of the film element, to a first surface of the carrier layer (10),

application of a second electrically conductive layer (30) in which a second coiled conductor path (37) having a second conductor path section (38") which comprises at least one three-quarter winding of the second coiled conductor path (37) is formed in the first region (71), to a second surface of the carrier layer (10) which opposes the first surface, in such a way that the first and second conductor paths (27, 37) overlap at least in regions and are coupled to each other to form an antenna structure,

**characterised in that**,
the first conductor path section (102) at least partially overlaps at least each of two partial sections (104, 105) of the second conductor path section in a region which comprises t windings of the first conductor path section (102), wherein the two partial sections (104, 105) are allocated to different windings of the second coiled conductor path (103) and t $\geq$ ¼, and wherein, in particular, the second electrically conductive layer (30) is applied to the second surface of the carrier layer (10),which opposes the first surface, in such a way that the surface dimensions of the overlap surface of the first and second conductor path sections remain constant during displacement of the first coiled conductor path by 100 $\mu$m with respect to the second coiled conductor path in a first direction (61) which lies in the plane spanned by the carrier layer.

## Revendications

**1.** Elément pelliculaire (1, 2) multicouche, comprenant une couche de support (10) flexible diélectrique présentant une épaisseur de couche inférieure à 800 $\mu$m, avec une première couche (20) électroconductrice, dans laquelle est formée une première piste conductrice (27, 81, 101, 111, 121, 131) en forme de bobine dans une première zone (71 à 77) de l'élément pelliculaire, une deuxième couche électroconductrice (30), dans laquelle une deuxième piste conductrice (37, 83, 103, 113, 123, 133) est formée dans la première zone (71 à 77), sachant que la couche de support (10) diélectrique est disposée entre la première et la deuxième couche électroconductrice et que la première et la deuxième piste conductrices (27, 37) se recouvrent au moins par endroits et sont couplées l'une à l'autre pour former une structure d'antenne, et sachant qu'une première section de pistes conductrices englobant au moins les trois quarts de l'enroulement de la première piste conductrice en forme de bobine recouvre au moins par endroits une deuxième section de pistes conductrices englobant les trois quarts de l'enroulement de la deuxième piste conductrice par rapport à une direction (63) perpendiculaire sur le plan formé par la couche de support, **caractérisé en ce que** la première section de pistes conductrices (102) recouvre respectivement, au moins en partie, au moins deux sections partielles (104, 105) de la deuxième section de piste conductrice dans une zone comprenant t enroulements de la première section de piste conductrice (102), sachant que les deux sections partielles (104, 105) sont associées à divers enroulements de la deuxième piste conductrice (103) en forme de bobine et sachant que t est $\geq$ ¼.

**2.** Elément pelliculaire multicouche selon la revendication 1,
**caractérisé en ce que**
la première section de piste conductrice recouvre au moins par endroits la deuxième section de piste conductrice dans un sens (63) perpendiculaire sur le plan formé par la couche de support, de telle manière que la dimension de surface de la surface de recouvrement de la première et de la deuxième section de piste conductrice reste constante en cas de déplacement par coulissement de 100 $\mu$m de la première piste conductrice (27, 28, 81, 83, 101, 102, 111, 113, 121, 123, 131, 133) dans une première direction (61) se trouvant dans le plan formé par la couche de support (10).

**3.** Elément pelliculaire multicouche selon l'une quelconque des revendications précédentes, **caractérisé en ce que** la distance (91) entre les deux sections partielles (104, 105) de la deuxième section de piste conductrice (103) est inférieure d'au moins la valeur r à la largeur (92) de la première section de piste conductrice (102) dans ladite zone, et **en ce que** dans ladite zone, la somme des largeurs (93, 94) des deux sections partielles (104, 105) et de la distance (91) entre les sections partielles (104, 105) est plus grande d'au moins la valeur r que la largeur (92) de la première section de piste conductrice (101), sachant que r est $\geq$ 100 $\mu$m et qu'en particulier la largeur de chacune des sections partielles est $\geq$ à r.

**4.** Elément pelliculaire multicouche selon l'une quelconque des revendications précédentes, **caractérisé en ce que** la première section de piste conductrice (28, 82) recouvre intégralement la deuxième section de piste conductrice (38", 84) dans une zone comprenant t enroulements de la première section de piste conductrice, et **en ce que** l'allongement de la deuxième piste conductrice (37, 83) est inférieur de la valeur r à l'allongement de la première piste conductrice (27, 81) dans ladite zone, le long de la première section de piste conductrice dans au moins une première direction (65) se trouvant dans le plan formé par la couche de support, sachant que t est $\geq$ ¼ et que r est $\geq$ 100 $\mu$m.

**5.** Corps multicouche selon l'une quelconque des revendications précédentes, **caractérisé en ce que** la première section de piste conductrice (28") entoure complètement la deuxième section de piste conductrice (38") par rapport à la direction (63) perpendiculaire sur le plan formé par la couche de support, et **en ce que** l'allongement de la deuxième piste conductrice (37) est inférieur d'au moins 100 $\mu$m à l'allongement de la première piste conductrice (27) le long de la première section de piste conductrice (38") dans la première direction (61).

**6.** Elément pelliculaire multicouche selon la revendication 4 ou 5, **caractérisé en ce que** l'allongement de la deuxième piste conductrice (37) est inférieur au moins de 50 $\mu$m à l'allongement de la première piste conductrice (27) le long de la première section de piste conductrice (28") dans une deuxième direction (62) située dans le plan formé par la couche de support, sachant que la première et la deuxième direction (61, 62) forment un angle droit.

**7.** Elément pelliculaire multicouche selon la revendication 4 ou 5, **caractérisé en ce que** l'allongement de la deuxième piste conductrice (37) est inférieur d'une valeur comprise entre 200 et 400 $\mu$m à l'allongement de la première piste conductrice (27) le long de la première section de piste conductrice (28") dans la deuxième direction (62).

**8.** Elément pelliculaire multicouche selon la revendication 4 ou 5, **caractérisé en ce que** la différence dans l'allongement de la première et de la deuxième piste conductrice est plus grande dans la première direction (61), en particulier de plus de 20 % supérieure à la différence dans l'allongement de la première et de la deuxième piste conductrice dans la deuxième direction (62), le long de la première section de piste conductrice (28").

**9.** Elément pelliculaire multicouche selon l'une quelconque des revendications précédentes, **caractérisé en ce que** les premières et les deuxièmes sections de piste conductrice (111, 114) se recouvrent en partie dans une zone comprenant t enroulements de la première section de piste conductrice (111) le long de la première section de piste conductrice (111), **en ce que** le diamètre extérieur (95, 96) de l'enroulement respectif de la première piste conductrice (111) en forme de bobine et de la deuxième piste conductrice (113) en forme de bobine est, dans au moins une première direction (61) se trouvant dans le plan formé par la couche de support, différent de la valeur r, et **en ce que** les largeurs de la première piste conductrice (111) en forme de bobine et de la deuxième piste conductrice (113) en forme de bobine sont respectivement plus grandes que le multiple de la valeur r, sachant que t est $\geq$ à ¼ et que r est $\geq$ 100 $\mu$m.

**10.** Elément pelliculaire multicouche selon la revendication 9, **caractérisé en ce que** la largeur (97) de la piste conductrice en forme de bobine présentant le diamètre extérieur le plus grand de chaque enroulement est plus grande ou égale à la largeur (98) de la piste conductrice (113) en forme de bobine présentant le diamètre extérieur le plus petit de l'enroulement respectif.

11. Elément pelliculaire multicouche selon l'une quelconque des revendications précédentes,
**caractérisé en ce que**
la première piste conductrice et/ou la deuxième piste conductrice en forme de bobine sont structurées dans la première section de piste conductrice (102', 102", 112', 112") et/ou dans la deuxième section de piste conductrice, est en particulier sous-structurées de manière à présenter une forme de zigzag ou une forme de ligne ondulée.

12. Elément pelliculaire multicouche selon la revendication 11,
**caractérisé en ce que**
la première et/ou la deuxième piste conductrice sont sous-structurées dans la première section de piste conductrice et/ou dans la deuxième section de piste conductrice, selon une fonction de sous-structuration périodique, sachant que la période de fonction de sous-structuration est inférieure à 10 mm, en particulier inférieure à 5 mm.

13. Elément pelliculaire multicouche selon l'une quelconque des revendications précédentes,
**caractérisé en ce que**
la première piste conductrice (27) présente une troisième section de piste conductrice (29), qui jouxte la première section de piste conductrice (28") et la largeur de piste conductrice de la troisième piste conductrice (29) est inférieure à la largeur de piste conductrice de la première section de piste conductrice (28"), **en ce que** la largeur de piste conductrice de la troisième section de piste conductrice (29) est inférieure d'au moins 100 $\mu$m à la largeur de piste conductrice de la première section de piste conductrice (28"), **en ce que** la largeur de piste conductrice de la troisième section de piste conductrice (29) est inférieure d'au moins 100 $\mu$m à la largeur de piste conductrice de la première section de piste conductrice (28") et/ou **en ce que** la largeur de bande conductrice de la troisième section de piste conductrice (29) est comprise entre 10 et 50 % de la largeur de piste conductrice de la première section de piste conductrice (28").

14. Elément pelliculaire multicouche selon l'une quelconque des revendications précédentes,
**caractérisé en ce que**
une couche décorative (41, 42) est disposée entre la première et la deuxième piste conductrices (27, 37) et/ou sur le côté opposé à la couche de support (10) de la première et/ou de la deuxième piste conductrice (27, 37), sachant que la couche décorative, en lien avec la première et/ou la deuxième couche (20, 30) électroconductrice fournit un élément de sécurité à variation optique, et/ou **en ce qu'**une structure en relief est formée au moins par endroits dans la première et/ou la deuxième piste conductrice, en particulier est formée par une structure en relief générant un effet à variation optique dans la première et/ou la deuxième piste conductrice.

15. Procédé servant à fabriquer un élément pelliculaire (1, 2) multicouche, comprenant les étapes suivantes consistant à :

fournir une couche de support (10) flexible diélectrique présentant une épaisseur de couche inférieure à 800 $\mu$m ;
appliquer, sur une première surface de la couche de support (10), une première couche électroconductrice, dans laquelle une première piste conductrice (27) en forme de bobine est formée dans une première zone (71) de l'élément pelliculaire, avec une première section de piste conductrice (28") comprenant au moins trois-quarts d'un enroulement de la première piste conductrice (27) en forme de bobine,
appliquer une deuxième couche (30) électroconductrice, dans laquelle une deuxième piste conductrice (37) en forme de bobine comprenant une deuxième section de piste conductrice (38") comprenant au moins un tiers de l'enroulement de la deuxième piste conductrice (37) en forme de bobine, sur une deuxième surface, opposée à la première surface, de la couche de support (10), de telle manière que la première et la deuxième piste conductrices (27, 37) se recouvrent au moins par endroits et sont couplées l'une à l'autre pour former une structure d'antenne, caractérisée en ce la première section de piste conductrice (102) recouvre respectivement au moins en partie au moins deux sections partielles (104, 105) de la deuxième section de piste conductrice dans une zone comprenant t enroulements de la première section de piste conductrice (102), sachant que les deux sections partielles (104, 105) sont associées à des enroulements différents de la deuxième piste conductrice (103) en forme de bobine et sachant que t est $\geq$ ¼, et sachant en particulier que la deuxième couche (30) électroconductrice est appliquée sur la deuxième surface opposée à la première surface du dispositif de support (10), de telle manière que la dimension de surface de la face de recouvrement de la première et de la deuxième section de piste conductrice reste constante de 100 $\mu$m en cas de déplacement par coulissement de la première piste conductrice en forme de bobine par rapport à la deuxième piste conductrice en forme de bobine, dans la première direction (61) se trouvant dans le plan formé par la couche de support.

Fig. 1

Fig. 2

Fig. 3

Fig. 4

Fig. 5

Fig. 6

Fig. 7

Fig. 8a

Fig. 8b

Fig. 9a

Fig. 9b

Fig. 10 d

Fig. 10b

Fig. 11 α

Fig. 11 b

Fig. 12 α

Fig. 12 b

Fig. 13 a

Fig. 13 b

Fig. 14 a

Fig. 14 b

Fig. 15 a

Fig. 15 b

Fig. 15c

Fig. 15d

76

122    124

Fig. 16a

124                              124            123
30 ~

~10
20 ~
122                    122      121
Fig. 16b    122

77

132    136                   135    132    134

Fig. 17a

136                              135    134    133
30 ~

~10
20 ~    ~132                  132      131
Fig. 17b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19601358 C2
- EP 1179811 A1

- DE 102007027838 A1